(19) **Europäisches Patentamt**
**European Patent Office**
**Office européen des brevets**

(11) **EP 3 239 202 B1**

(12) **EUROPEAN PATENT SPECIFICATION**

(45) Date of publication and mention
of the grant of the patent:
**31.08.2022 Bulletin 2022/35**

(21) Application number: **15873053.1**

(22) Date of filing: **22.12.2015**

(51) International Patent Classification (IPC):
**C08G 18/12** *(2006.01)* **C08G 18/44** *(2006.01)*
**C08G 18/80** *(2006.01)* **C08G 18/79** *(2006.01)*
**C08G 18/28** *(2006.01)*

(52) Cooperative Patent Classification (CPC):
**C08G 18/44; C08G 18/283; C08G 18/792;
C08G 18/8077; C08G 18/808**

(86) International application number:
**PCT/JP2015/085790**

(87) International publication number:
**WO 2016/104485 (30.06.2016 Gazette 2016/26)**

(54) **POLYISOCYANATE COMPOSITION AND METHOD FOR PRODUCING THE SAME, BLOCKED POLYISOCYANATE COMPOSITION AND METHOD FOR PRODUCING THE SAME, RESIN COMPOSITION AND HARDENED MATERIAL**

POLYISOCYANATZUSAMMENSETZUNG UND VERFAHREN ZU DESSEN HERSTELLUNG, BLOCKIERTE POLYISOCYANATZUSAMMENSETZUNG UND VERFAHREN ZU DESSEN HERSTELLUNG, HARZZUSAMMENSETZUNG UND GEHÄRTETES MATERIAL

COMPOSITION DE POLYISOCYANATE ET PROCÉDÉ POUR LA PRODUIRE, COMPOSITION DE POLYISOCYANATE BLOQUÉ ET PROCÉDÉ POUR LA PRODUIRE, COMPOSITION DE RÉSINE ET MATÉRIAU DURCI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2014 JP 2014266116**

(43) Date of publication of application:
**01.11.2017 Bulletin 2017/44**

(73) Proprietor: **Asahi Kasei Kabushiki Kaisha
Tokyo 100-0006 (JP)**

(72) Inventors:
• **MIWA, Yuichi**
**Tokyo 101-8101 (JP)**
• **TSUJITA, Junya**
**Tokyo 101-8101 (JP)**

(74) Representative: **Strehl Schübel-Hopf & Partner
Maximilianstrasse 54
80538 München (DE)**

(56) References cited:
**WO-A1-2010/098318       WO-A1-2013/146986
JP-A- 2011 231 264      US-A1- 2011 077 310
US-A1- 2011 281 998     US-A1- 2011 306 724**

## Description

Technical Field

The present invention relates to a polyisocyanate composition and a method for producing the polyisocyanate composition, a blocked polyisocyanate composition and a method for producing the blocked polyisocyanate composition , a resin composition and a hardened material.

Background Art

Recently, in view of environmental protection, a two-component urethane coating composition crosslinkable at normal temperature now used as a solvent-based paint is desired to be developed as a water-based paint. However, a polyisocyanate used as a hardener in the two-component urethane coating composition is rarely dispersed in water. For the reason, a polyisocyanate having a hydrophilic group has been developed (for example, Patent Literature 1 and Patent Literature 2).

Citation List

Patent Literature

Patent Literature 1: Japanese Patent Laid-Open No. H9-328654
Patent Literature 2: International Publication No. WO 2001/088006
US 2011/281998 A1, US 2011/306724 A1 and US 2011/077310 A1 disclose examples of polyisocyanate compositions obtained from an aliphatic or an alicyclic diisocyanate, polycarbonate diol, and polyethylene monomethylether.

Summary of Invention

Technical Problem

However, with a polyisocyanate having a hydrophilic group prepared by using a component having a hydrophilic group, the water resistance of the coating film obtained therefrom sometimes reduces. The polyisocyanate compositions described in Patent Literature 1 and Patent Literature 2 cannot provide a coating film having excellent water resistance and heat resistance.
Then, an object of the present invention is to provide a polyisocyanate composition stably dispersed in water and providing a coating film having excellent water resistance and strength in high temperature.

Solution to Problem

The present inventors conducted intensive studies with a view to solving above problems in the prior art. As a result, they found that a polyisocyanate composition obtained from a predetermined polyisocyanate, a polycarbonate diol and a predetermined hydrophilic compound, is excellent in dispersibility in water and provides a coating film having excellent water resistance and strength in high temperature. Based on the finding, the present invention was accomplished.

Advantageous Effects of Invention

According to the polyisocyanate composition of the present invention, it is possible to obtain stable dispersibility in water and provide a coating film having excellent water resistance and strength in high temperature.

Description of Embodiments

Now, an embodiment for carrying out the present invention (hereinafter referred to as "the embodiment") will be more specifically described below. The following embodiment is just an example for illustrating the present invention and should not be construed as limiting the present invention to the following contents. The present invention can be modified in various ways within the scope of the invention. In the specification, the amount of a predetermined functional group contained in a composition or a compound can be expressed by a "molar ratio". More specifically, the number of predetermined functional groups contained in a composition or a compound are divided by the Avogadro's number and the unit of the obtained value is defined as mole. In this manner, the amount of a predetermined functional group is expressed by the "molar ratio" based on the amount of another predetermined functional group. Note that, the predetermined functional group contained in a composition refers to the predetermined functional group of a compound contained in the composition.

[Polyisocyanate composition]

The polyisocyanate composition according to the embodiment is obtained from a polyisocyanate (hereinafter referred to also as a "polyisocyanate (A)") obtained from at least one diisocyanate selected from the group consisting of an aliphatic diisocyanate and an alicyclic diisocyanate, a polycarbonate diol (hereinafter referred to also as a "polycarbonate diol (B)"), and a hydrophilic compound having a hydrophilic group (hereinafter referred to also as a "hydrophilic compound (C)"). The polyisocyanate composition has a structural unit derived from a polyisocyanate (A), which is obtained from one or more diisocyanates selected from the group consisting of an aliphatic diisocyanate monomer and an alicyclic diisocyanate monomer. The hydrophilic compound (C) can react with one isocyanate group per molecule thereof.

<Polyisocyanate (A)>

The polyisocyanate (A) according to the embodiment can be obtained from at least one diisocyanate selected from the group consisting of an aliphatic diisocyanate and an alicyclic diisocyanate. The aliphatic diisocyanate and alicyclic diisocyanate each refer to a compound containing no aromatic ring such as a benzene ring in the structure.
The aliphatic diisocyanate is not particularly limited; however, it is preferably an aliphatic diisocyanate having 4 or more and 30 or less carbon atoms. Examples thereof include tetramethylene-1,4-diisocyanate, pentamethylene-1,5-diisocyanate, hexamethylene diisocyanate (hereinafter referred to also as "HDI"), 2,2,4-trimethylhexamethylene-1,6-diisocyanate and lysine diisocyanate. The alicyclic diisocyanate is not particularly limited; however, it is preferably an alicyclic diisocyanate having 8 or more and 30 or less carbon atoms. Examples thereof include isophorone diisocyanate (hereinafter referred to also as "IPDI"), hydrogenated xylylene diisocyanate, hydrogenated diphenylmethane diisocyanate and 1,4-cyclohexane diisocyanate.
Of the aliphatic diisocyanates and alicyclic diisocyanates mentioned above, HDI, IPDI, hydrogenated xylylene diisocyanate and hydrogenated diphenylmethane diisocyanate are more preferable since they are industrially easily available; and HDI is further preferable. When HDI is used, the polyisocyanate composition tends to provide a coating film having more excellent weather resistance and flexibility. Note that, the aliphatic diisocyanates and alicyclic diisocyanates may be used alone or in combination of two or more.
The diisocyanate preferably includes hexamethylene diisocyanate (HDI). Due to the presence of HDI, the coating film obtained from the polyisocyanate composition tends to have more excellent weather resistance and flexibility.
The polyisocyanate (A) may be obtained from a diisocyanate as mentioned above and an alcohol of a monovalent or more and a hexavalent or less mentioned below. As such an alcohol (of a monovalent or more and hexavalent or less), a non-polymer polyol and a polymer polyol are mentioned. The non-polymer polyol is a polyol not having undergone polymerization; whereas the polymer polyol is a polyol obtained by a polymerization process of a monomer.
The non-polymer polyol is not particularly limited; however, for example, a monoalcohol, a diol, a triol and a tetraol are mentioned. Examples of the monoalcohol include, but are not particularly limited to, methanol, ethanol, n-propanol, i-propanol, n-butanol, i-butanol, s-butanol, n-pentanol, n-hexanol, n-octanol, n-nonanol, 2-ethylbutanol, 2,2-dimethylhexanol, 2-ethylhexanol, cyclohexanol, methylcyclohexanol and ethylcyclohexanol. Examples of the diol include, but are not particularly limited to, ethylene glycol, diethylene glycol, triethylene glycol, propylene glycol, dipropylene glycol, tripropylene glycol, 1,2-propane diol, 1,3-propane diol, 1,2-butane diol, 1,3-butane diol, 1,4-butane diol, 2,3-butane diol, 2-methyl-1,2-propane diol, 1,5-pentane diol, 2-methyl-2,3-butane diol, 1,6-hexane diol, 1,2-hexane diol, 2,5-hexane diol, 2-methyl-2,4-pentane diol, 2,3-dimethyl-2,3-butane diol, 2-ethyl-hexane diol, 1,2-octane diol, 1,2-decane diol, 2,2,4-trimethylpentane diol, 2-butyl-2-ethyl-1,3-propane diol and 2,2-diethyl-1,3-propane diol. Examples of the triol include, but are not particularly limited to, glycerin and trimethylolpropane. Examples of the tetraol include, but are not particularly limited to, pentaerythritol.
The polymer polyol is not particularly limited; however, for example, a polyester polyol, a polyether polyol, an acrylic polyol and a polyolefin polyol are mentioned.
Examples of the polyester polyol include, but are not particularly limited to, a polyester polyol obtained by a condensation reaction between a dicarboxylic acid, such as succinic acid, adipic acid, sebacic acid, dimer acid, maleic anhydride, phthalic anhydride, isophthalic acid, terephthalic acid, which may be a single compound or a mixture, and a polyhydric alcohol such as ethylene glycol, propylene glycol, diethylene glycol, neopentyl glycol, trimethylolpropane and glycerin, which may be used alone or as a mixture; and a polycaprolactone obtained by ring-opening polymerization of ε-caprolactone by use of a polyhydric alcohol.

Examples of the polyether polyol include, but are not particularly limited to, a polyether polyol obtained by adding an alkylene oxide, such as ethylene oxide, propylene oxide, butylene oxide, cyclohexene oxide and styrene oxide, which may be a single compound or a mixture, to a polyvalent hydroxy compound, which may be a single compound or a mixture, at random or as a block, by using e.g., a hydroxide of e.g., lithium, sodium or potassium, a strong basic catalyst such as an alcoholate and an alkylamine or e.g., a complex metal cyan compound complex such as a metal porphyrin and a zinc hexacyanocobaltate complex; a polyether polyol obtained by reacting an alkylene oxide with a polyamine compound such as ethylenediamine; and a so-called polymer polyol obtained by polymerizing e.g., acrylamide to each of these polyether polyols used as a medium.

Examples of the acrylic polyol include, but are not particularly limited to, a substance obtained by copolymerizing an ethylenic unsaturated bond-containing monomer having a hydroxy group, which may be a single compound or a mixture, and another ethylenic unsaturated bond-containing monomer, which may be a single compound or a mixture, copolymerizable to the above one. Examples of the ethylenic unsaturated bond-containing monomer having a hydroxy group include, but not particularly limited to, hydroxyethyl acrylate, hydroxypropyl acrylate, hydroxybutyl acrylate, hydroxyethyl methacrylate, hydroxypropyl methacrylate and hydroxybutyl methacrylate. Of these, hydroxyethyl acrylate and hydroxyethyl methacrylate are preferable.

Examples of the polyolefin polyol include, but are not particularly limited to, a polybutadiene having two or more hydroxy groups, hydrogenated polybutadiene, polyisoprene and hydrogenated polyisoprene.

The polyisocyanate (A) contains a trimer produced by polymerizing three diisocyanates. Owing to this, the hardenability of the coating film to be obtained tends to be more excellent.

The polyisocyanate (A) containing a component produced by polymerizing three diisocyanates contains an isocyanurate group, and may contain a group selected from the group consisting of a biuret group, a uretdione group, an oxadiazinetrione group, an iminooxadiazinedione group, an allophanate group, a urethane group and a urea group, or contains two groups or more selected from these, at the same time.

With the polyisocyanate (A) containing an isocyanurate group, the coating film to be obtained from the polyisocyanate composition tends to have more excellent weather resistance and hardenability.

A method for producing a polyisocyanate (A) containing an isocyanurate group is not particularly limited; however, a method for producing the polyisocycanate (A) by carrying out an isocyanuration reaction of a diisocyanate in the presence of e.g., a catalyst, terminating the reaction at a predetermined inversion rate and removing an unreacted diisocyanate, is mentioned as an example.

The catalyst to be used in the above isocyanuration reaction is not particularly limited; however, a catalyst having a basic property is preferable. Specific examples thereof include a hydroxide of a tetraalkylammonium such as tetramethylammonium and tetraethylammonium and a salt thereof with an organic weak acid such as acetic acid and capric acid; a hydroxide of a hydroxyalkylammonium such as trimethylhydroxypropylammonium, trimethylhydroxyethylammonium, triethylhydroxypropylammonium and triethylhydroxyethylammonium and a salt with an organic weak acid such as acetic acid and capric acid; an alkali metal salt, i.e., a salt of an alkyl carboxylic acid such as acetic acid, caproic acid, octylic acid and myristic acid with a metal such as tin, zinc and lead; a metal alcoholate of e.g., sodium and potassium; an aminosilyl group-containing compound such as hexamethyldisilazane; a mannich base; a combination of a tertiary amine and an epoxy compound; and a phosphoric compound such as tributyl phosphine. The use amount of each of these catalysts is preferably 10 ppm or more and 1.0% or less based on the total mass of starting materials, i.e., diisocyanate and alcohol. To terminate the isocyanuration reaction, the catalyst may be inactivated by e.g., addition of an acidic substance such as phosphoric acid and an acidic phosphate for neutralizing the catalyst, thermal decomposition or chemical decomposition.

The yield of the polyisocyanate (A) generally tends to be 10 mass% or more and 70 mass% or less. The higher the yield of the polyisocyanate (A), the higher the viscosity tends to be. The yield is measured by a method described in Examples (later described).

The reaction temperature of the isocyanuration reaction is not particularly limited; however, it is preferably 50°C or more and 200°C or less and more preferably 50°C or more and 150°C or less. If the reaction temperature is 50°C or more, the reaction tends to easily proceed. In contrast, if the reaction temperature is 200°C or less, a side reaction such as a coloring reaction tends to be successfully suppressed.

After completion of the isocyanuration reaction, an unreacted diisocyanate monomer is preferably removed by e.g., a thin film evaporator and/or extraction. The polyisocyanate (A), even if it contains an unreacted diisocyanate, contains a diisocyanate in an amount of preferably 3.0 mass% or less, more preferably 1.0 mass% or less and further preferably 0.5 mass% or less. If the residual unreacted diisocyanate monomer concentration falls within the above range, hardenability tends to be excellent.

The polyisocyanate (A), if it contains a biuret group, tends to be more excellent in dispersion stability in water, water resistance and strength in high temperature. In addition, extensibility tends to be more excellent.

A method for producing a polyisocyanate (A) containing a biuret group, is not particularly limited; however, a continuous production method, as disclosed in Japanese Patent Publication No. 62-41496 is preferable, in which a diisocyanate monomer and a biuretizing agent are reacted while homogeneously stirring; the resulting reaction product is further led to a pipe reactor and allowed to react during the course of flow.

The viscosity of a polyisocyanate (A) is not particularly limited; however, it is preferably 100 mPa· s or more and 30000 mPa· s or less at 25°C, more preferably 500 mPa· s or more and 10000 mPa· s or less and further preferably, 550 mPa· s or more and 4000 mPa· s or less. The viscosity at 25°C is measured by a method described in Examples (described later).

The number average molecular weight of a polyisocyanate (A) is not particularly limited; however, it is preferably 500 or more and 2000 or less and more preferably 550 or more and 1000 or less. The number average molecular weight is measured by a method described in Examples (described later).

An average number of isocyanate functional groups in a polyisocyanate (A) (statistical average number of isocyanate groups per polyisocyanate (A) molecule) is not particularly limited. However, in order to increase the crosslinkability, the average number is preferably 3.0 or more; whereas, in order to obtain satisfactory solubility to a solvent and satisfactory dispersion stability in water, the average number is preferably 20 or less, more preferably 4.0 or more and 15 or less and further preferably 4.0 or more and 9.0 or less. The average number of isocyanate functional groups is determined by a method described in Examples (described later).

The isocyanate-group concentration of a polyisocyanate (A) is not particularly limited; however, it is preferably 5.0 mass% or more and 25 mass% or less, more preferably 10 mass% or more and 24 mass% or less and further preferably 15 mass% or more and 24 mass% or less. The isocyanate-group concentration is measured by a method described in Examples (described later).

The polyisocyanate (A), although it is not particularly limited, contains a diisocyanate trimer preferably in an amount of 20 mass% or more and 65 mass% or less and more preferably 25 mass% or more and 60 mass% or less, in view of hardenability and water resistance of the coating film to be formed.

<Polycarbonate diol (B)>

The polyisocyanate composition according to the embodiment has a structural unit derived from a polycarbonate diol (B).

The number average molecular weight of the polycarbonate diol (B) is not particularly limited; however, it is preferably 300 or more and 4000 or less, more preferably 400 or more and 2500 or less and further preferably 500 or more and 2000 or less. If the number average molecular weight falls within the above range, flexibility and workability tend to be more excellent. The number average molecular weight is determined by a method described in Examples (described later).

The polycarbonate diol (B) repeatedly has a structural unit, which is obtained by dehydration condensation of two alcohol groups and a single carbonate group. The polycarbonate diol (B) is preferably obtained by copolymerization of a first diol having 2 or more and 20 or less carbon atoms, a second diol having 2 or more and 20 or less carbon atoms (hereinafter referred to simply as "two diols") and a carbonate compound. In this case, workability tends to be more excellent. Note that, the second diol is a diol having 2 or more and 20 or less carbon atoms except the first diol, in other words, the same type diol as the first diol, is eliminated.

The method for producing a polycarbonate diol is not particularly limited; however, a method of subjecting two diols and a carbonate compound to a dealcoholization reaction and/or de-phenol reaction; and a method of subjecting a high molecular weight polycarbonate polyol to a transesterification reaction by use of two diols, are mentioned. The method of reacting two diols and a carbonate compound is not particularly limited; however, a known method is mentioned and any one of the methods described in "Polymer Reviews, Vol. 9" (published by Interscience Publishers in the United States, in 1964 written by H. Schnell, pages 9 to 20) may be used.

Two diols are not particularly limited; however, for example, at least one type of diol selected from the group consisting of an aliphatic diol and an aromatic diol may be mentioned. Of these, an alkylene glycol having 2 or more and 20 or less carbon atoms and two hydroxy groups is preferable. Using alkylene glycol, the weather resistance and chemical resistance of the coating film to be formed from the composition tend to be more excellent. The "alkylene" used herein may be branched or contain an alicyclic structure. These diols may be used alone or in combination of two or more.

Examples of the two diols include, but are not particularly limited to, ethylene glycol, 1,2-propane diol, 1,3-propane diol, 1,2-butane diol, 1,3-butane diol, 1,4-butane diol, 1,5-pentane diol, 1,6-hexane diol, 1,7-heptane diol, 1,8-octane diol, 1,9-nonane diol, 2-ethyl-1,6-hexane diol, 2-methyl-1,3 propane diol, 3-methyl-1,5-pentane diol, neopentyl glycol, 1,3-cyclohexane diol, 1,4-cyclohexane diol, 2,2'-bis(4-hydroxycyclohexyl)-propane, p-xylylene diol, p-tetrachloroxylylene diol, 1,4-dimethylolcyclohexane, bis(hydroxymethyl) tetrahydrofuran, di(2-hydroxyethyl) dimethylhydantoin, diethylene glycol, dipropylene glycol, polypropylene glycol, polytetramethylene glycol, 2,6'-dihydroxyethylhexyl ether, 2,4'-dihydroxyethyl butyl ether, 2,5'-dihydroxyethyl pentyl ether, 2,3'-dihydroxy-2',2'-dimethylethyl propyl ether and thioglycol.

Of these, a diol having 2 or more and 11 or less carbon atoms is preferable and a diol having 3 or more and 6 or less carbon atoms is more preferable.

The combination of two diols is not particularly limited; however, a combination of a diol having 5 carbon atoms and a diol having 6 carbon atoms; a combination of two or more isomers of a diol having 4 carbon atoms; and a combination of a diol having 4 carbon atoms and a diol having 6 carbon atoms are preferable. If such two diols are used in a polyisocyanate composition, the coating film to be obtained from the composition tends to have more excellent extensibility, heat resistance and water resistance (hydrolysis resistance). As a combination of such two diols, more specifically, at least one combination selected from the group consisting of 1,4-butane diol, 1,5-pentane diol, 1,6-hexane diol and 2-methyl-1,3 propane diol is preferable; a combination of 1,6-hexane diol and 1,5-pentane diol, a combination of 1,6-hexane diol and 1,4-butane diol and a combination of 1,4-butane diol and 2-methyl-1,3 propane diol are more preferable.

The carbonate compound is not particularly limited; however, an alkylene carbonate, a dialkyl carbonate, a diaryl carbonate and phosgene are mentioned; more specifically, ethylene carbonate, propylene carbonate, dimethyl carbonate, diethyl carbonate, dibutyl carbonate and diphenyl carbonate are mentioned. Of these, in view of easiness in production, diethyl carbonate is preferable.

<Hydrophilic compound (C)>

The hydrophilic compound (C) according to the embodiment can react with one isocyanate group per molecule thereof. The polyisocyanate composition has a structural unit derived from a hydrophilic compound. This is because the hydrophilic compound (C) is a compound having a hydrophilic group. In other words, the hydrophilic group is a functional group to be added to a polyisocyanate (A) after the hydrophilic compound (C) reacts with the polyisocyanate (A). Owing to this, the polyisocyanate composition can obtain stable water dispersibility.

In order for a hydrophilic compound (C) to react with one isocyanate group of a polyisocyanate (A), the hydrophilic compound (C) preferably has a single active hydrogen group (for reacting with the isocyanate group) per molecule of the hydrophilic compound (C). Examples of the active hydrogen group include, but are not particularly limited to, a hydroxy group, a mercapto group, a carboxylic group, an amino group and a thiol group.

Examples of the hydrophilic group include, but are not particularly limited to, a nonionic hydrophilic group, a cationic hydrophilic group and an anionic hydrophilic group.

Examples of the hydrophilic compound (C) having a nonionic hydrophilic group include, but are not particularly limited to, a monoalcohol such as methanol, ethanol and butanol; and a compound such as ethylene glycol and diethylene glycol, obtained by adding an ethylene oxide to a hydroxyl group(s) of an alcohol. These have an active hydrogen group reacting with an isocyanate group. Of these, a monoalcohol which can improve water dispersibility of a polyisocyanate in a small use amount, is preferable. The addition number of ethylene oxides of a compound having ethylene oxides added thereto is preferably 4 or more and 30 or less and more preferably 4 or more and 20 or less. If the addition number of ethylene oxides is 4 or more, water dispersibility of the polyisocyanate composition tends to be ensured. In contrast, if the addition number of ethylene oxides is 30 or less, the polyisocyanate composition tends to rarely precipitate during low temperature storage.

The amount of the nonionic hydrophilic group to be added to a polyisocyanate (A) is preferably 5.0 mass% or more and 60 mass% or less based on the mass (100 mass%) of the polyisocyanate (A), more preferably 5.0 mass% or more and 50 mass% or less and further preferably 5.0 mass% or more and 40 mass% or less. If the amount of the nonionic hydrophilic group falls within the above range, the polyisocyanate composition is more dispersed in water and the water resistance of the coating film to be formed tends to be more improved.

Examples of the hydrophilic compound (C) having a cationic hydrophilic group include, but are not particularly limited to, compounds having both a cationic group and an active hydrogen group. Alternatively, a compound having an active hydrogen group such as a glycidyl group in combination with a compound having a cationic hydrophilic group, such as sulfide and phosphine may be treated as the hydrophilic compound (C). In this case, a compound having an isocyanate group is previously reacted with a compound having an active hydrogen group to add a functional group such as a glycidyl group, and thereafter, a compound such as sulfide and phosphine is allowed to react. In view of easiness of production, a compound having both a cationic group and an active hydrogen group is preferable.

Examples of the compound having both a cationic group and an active hydrogen group include, but are not particularly limited to, dimethylethanolamine, diethylethanolamine, diethanolamine and methyldiethanolamine. The tertiary amino group which was added by use of these compounds can be quaternized by use of, for example, dimethyl sulfate or diethyl sulfate.

The hydrophilic compound having a cationic hydrophilic group can be reacted with a polyisocyanate (A) in the presence of a solvent. The solvent used herein is not particularly limited; however, a solvent containing no active hydrogen group is preferable. Examples thereof include ethyl acetate, propylene glycol monomethyl ether acetate and dipropylene glycol dimethyl ether.

The cationic hydrophilic group added to the polyisocyanate (A) is preferably neutralized with a compound having an anion group. Examples of the anion group include, but are not particularly limited to, a carboxyl group, a sulfonate group, a phosphate group, a halogen group and a sulfate group. Examples of the compound having a carboxyl group include, but are not particularly limited to, formic acid, acetic acid, propionic acid, butyric acid and lactic acid. Examples of the compound having a sulfonate group include, but are not particularly limited to, ethanesulfonic acid. Examples of the compound having a phosphate group include, but are not particularly limited to, phosphoric acid and acidic phosphate ester. Examples of the compound having a halogen group include, but are not particularly limited to, hydrochloric acid. Examples of the compound having a sulfate group include, but are not particularly limited to, sulfuric acid. Of these, a compound having a carboxyl group is preferable and acetic acid, propionic acid and butyric acid are more preferable.

Examples of the anionic hydrophilic group include, but are not particularly limited to, a carboxylic group, a sulfonate group, a phosphate group, a halogen group and a sulfate group. The hydrophilic compound (C) having an anionic hydrophilic group is not particularly limited; however, a compound having both an anion group and an active hydrogen group is mentioned. Examples thereof include monohydroxycarboxylic acid such as 1-hydroxyacetic acid, 3-hydroxypropanoic acid, 12-hydroxy-9-octadecanoic acid, hydroxypivalic acid and lactic acid; and compounds having a carboxylic group of a polyhydroxycarboxylic acid as an anion group such as dimethylolacetic acid, 2,2-dimethylolbutyric acid, 2,2-dimethylolpentanoic acid, dihydroxysuccinic acid and dimethylolpropionic acid. Of these, hydroxypivalic acid and dimethylolpropionic acid are preferable. In addition, a compound having both a sulfonate group and active hydrogen group is mentioned; more specifically, isethionic acid is mentioned.

The anionic hydrophilic group added to the polyisocyanate (A) is preferably neutralized with a basic substance, i.e., an amine compound. Examples of the amine compound include, but are not particularly limited to, ammonia and a water soluble amino compound. The water soluble amino compound is not particularly limited; however, at least one compound selected from the group consisting of monoethanolamine, ethylamine, dimethylamine, diethylamine, triethylamine, propylamine, dipropylamine, isopropylamine, di-isopropylamine, triethanolamine, butylamine, dibutylamine, 2-ethylhexylamine, ethylenediamine, propylenediamine, methylethanolamine, dimethylethanolamine, diethylethanolamine and morpholine. In addition, triethylamine as a tertiary amine and dimethylethanolamine are mentioned. These are also preferably used.

Of the hydrophilic groups mentioned above, a nonionic hydrophilic group is preferable for the reason that it is easily available and rarely has electric interaction with a composition.

The polyisocyanate composition can be dissolved in water by adding an additive. If necessary, the additive may be used together with the polyisocyanate composition. Examples of the additive include a nonionic compound, a cationic compound, an anionic compound and an amphoteric compound.

Examples of the nonionic compound include, but are not particularly limited to, an ether compound, an ester compound and an alkanolamide compound. Examples of the ether compound include, but are not particularly limited to, a compound obtained by adding an ethylene oxide(s) to a higher alcohol having 10 or more and 18 or less carbon atoms, a compound obtained by adding an ethylene oxide(s) to an alkyl phenol, a compound obtained by adding an ethylene oxide(s) to a polypropylene alcohol and a compound obtained by adding an ethylene oxide(s) to a fatty acid ester of a polyhydric alcohol. Examples of the ester compound include, but are not particularly limited to, a fatty acid ester of a higher alcohol such as glycerin and sorbitan. Examples of the alkanolamide compound include, but are not particularly limited to, a reaction product of a fatty acid and a diethanolamine.

Examples of the cationic compound include, but are not particularly limited to, a quaternary ammonium salt compound and an alkylamine salt compound. Examples of the amphoteric compound include, but are not particularly limited to, an alkyl betaine compound and a fatty acid amidopropyl betaine compound.

The polyisocyanate composition according to the embodiment may further contain an organic solvent in accordance with the use and purpose. Examples of the organic solvent include, but are not particularly limited to, an aliphatic hydrocarbon solvent such as hexane, heptane and octane; an alicyclic hydrocarbon solvent such as cyclohexane and methylcyclohexane; a ketone solvent such as acetone, methyl ethyl ketone, methyl isobutyl ketone and cyclohexanone; an ester solvent such as methyl acetate, ethyl acetate, butyl acetate, isobutyl acetate, methyl lactate and ethyl lactate; an aromatic solvent such as toluene, xylene, diethylbenzene, mesitylene, anisole, benzyl alcohol, phenyl glycol and chlorobenzene; a glycol-based solvent such as ethylene glycol monoethyl ether acetate, 3-methyl-3-methoxybutyl acetate, dipropylene glycol monomethyl ether and propylene glycol monomethyl ether; an ether solvent such as diethyl ether, tetrahydrofuran and dioxane; a halogenated hydrocarbon solvent such as dichloromethane, 1,2-dichloroethane and chloroform; a pyrrolidone solvent such as N-methyl-2-pyrrolidone; an amide solvent such as N,N-dimethylacetamide and N,N-dimethylformamide; a sulfoxide-based solvent such as dimethyl sulfoxide; a lactone-based solvent such as $\gamma$-butyrolactone; an amine-based solvent such as morpholine; and a mixture of these. These solvents may be used alone or in combination of two or more.

The polyisocyanate composition contains a diisocyanate trimer having an unreacted isocyanurate group in an amount of 10 mass% or more and 60 mass% or less based on the solid content (100 mass%) of the polyisocyanate composition in view of the hardenability, water resistance and weather resistance of the coating film to be obtained; more preferably 10 mass% or more and 40 mass% or less, and further preferably 20 mass% or more and 40 mass% or less. The diisocyanate trimer having an unreacted isocyanurate group refers to a diisocyanate trimer having an isocyanurate group and no isocyanate group inactivated by binding to an active hydrogen group of a polycarbonate diol (B) or a hydrophilic compound (C) or being blocked with a thermally dissociable blocking agent (D) (described later). The content of the above diisocyanate trimer is measured by a method described in Examples (described later).

In the polyisocyanate composition, the molar ratio of the number of functional isocyanurate groups based on the total amount of the isocyanurate group and urethane group contained in the polyisocyanate composition is preferably 0.4 or more and 0.9 or less in view of the hardenability and water resistance of the coating film to be obtained, and more preferably 0.5 or more and 0.8 or less. The molar ratio of the number of functional isocyanurate groups is determined by a method described in Examples (described later).

The polyisocyanate composition may contain a diisocyanate trimer having an unreacted biuret group in an amount of preferably 10 mass% or more and 60 mass% or less based on the solid content (100 mass%) of the polyisocyanate composition, in view of the water resistance and extensibility of the coating film to be obtained; more preferably 10 mass% or more and 40 mass% or less and further preferably 20 mass% or more and 40 mass% or less. The diisocyanate trimer having an unreacted biuret group refers to a diisocyanate trimer having a biuret group and no isocyanate group inactivated by binding to an active hydrogen group of a polycarbonate diol (B) or a hydrophilic compound (C) or being blocked with a thermally dissociable blocking agent (D) (described later). The content of the above diisocyanate trimer is measured by a method described in Examples (described later).

In the polyisocyanate composition, the molar ratio of the number of functional biuret groups based on the total amount of the biuret group and urethane group contained in the polyisocyanate composition is preferably 0.4 or more and 0.9 or less in view of the water resistance and extensibility of the coating film to be obtained, and more preferably 0.5 or more and 0.8 or less. The molar ratio of the number of functional biuret groups is determined by a method described in Examples (described later).

In the polyisocyanate composition, the molar ratio of a structural unit derived from a polycarbonate diol (B) based on the structural unit derived from a hydrophilic compound (C) is preferably 0.1 or more and 2.5 or less, more preferably 0.2 or more and 2.0 or less, further preferably 0.3 or more and 1.8 or less and further more preferably 0.3 or more and 1.5 or less. If the molar ratio (of a structural unit derived from the polycarbonate diol based on the structural unit derived from the hydrophilic compound) falls within the above range, the surface of the coating film to be obtained is suppressed from rapid hardening and from reacting with a water content in the air (when the coating film is hardened), with the result that bubble removability during hardening tends to be more excellent. The molar ratio of a structural unit derived from the polycarbonate diol based on the structural unit derived from the hydrophilic compound can be determined by obtaining the ratios of individual structural units by NMR and more specifically determined by a method described in Examples (described later).

The average number of isocyanate functional groups in the polyisocyanate composition is preferably 2.5 or more and 4.5 or less and more preferably 3.0 or more and 4.5 or less. If the average number of isocyanate functional groups falls within the above range, the hardenability and bubble removability of the coating film to be obtained tend to be more excellently balanced. The average number of isocyanate functional groups in the polyisocyanate composition is determined by a method described in Examples (described later).

The polyisocyanate composition preferably contains a structural unit derived from a polyisocyanate (A) in an amount of 30 mass% or more and 70 mass% or less; a structural unit derived from a polycarbonate diol (B) in an amount of 10 mass% or more and 60 mass% or less; and a structural unit derived from a hydrophilic compound (C) in an amount of 5.0 mass% or more and 30 mass% or less, based on the solid content (100 mass%) of the polyisocyanate composition.

[Blocked polyisocyanate composition]

The blocked polyisocyanate composition according to the embodiment can be obtained from the polyisocyanate composition according to the embodiment and a thermally dissociable blocking agent (hereinafter referred to also as "thermally dissociable blocking agent (D)"). The blocked polyisocyanate composition contains a blocked polyisocyanate. The blocked polyisocyanate composition has a structural unit derived from the thermally dissociable blocking agent (D).

The blocked polyisocyanate composition is not particularly limited; however, it can be obtained, for example, by blocking an isocyanate group of a polyisocyanate contained in the polyisocyanate composition through a reaction with a thermally dissociable blocking agent. The "thermal dissociability" of the thermally dissociable blocking agent herein means a property of dissociating the blocking agent bound to an isocyanate group from the isocyanate group by application of heat (in the blocked polyisocyanate). The temperature required for dissociating varies depending upon the structure of a thermally dissociable blocking agent (D); however, it is for example, 40°C or more and 300°C or less.

<Thermally dissociable blocking agent (D)>

A thermally dissociable blocking agent (D) include, but are not particularly limited to, an oxime compound, an alcohol compound, an acid amide compound, an acid imide compound, a phenol compound, an amine compound, an active methylene compound, an imidazole compound and a pyrazole compound.

Examples of the oxime compound include, but are not particularly limited to, formaldoxime, acetoaldoxime, acetoxime, methyl ethyl ketoxime and cyclohexanone oxime. Examples of the alcohol compound include, but are not particularly limited to, methanol, ethanol, 2-propanol, n-butanol, sec-butanol, 2-ethyl-1-hexanol, 2-methoxyethanol, 2-ethoxyethanol and 2-butoxyethanol. Examples of the acid amide compound include, but are not particularly limited to, acetanilide, acetic acid amide, ε-caprolactam, δ-valerolactam and γ-butyrolactam. Examples of the acid imide compound include, but are not particularly limited to, succinimide and maleic imide. Examples of the phenolic compound include, but are not particularly limited to, phenol, cresol, ethylphenol, butylphenol, nonylphenol, dinonylphenol, styrenated phenol and hydroxybenzoate. Examples of the amine compound include, but are not particularly limited to, diphenylamine, aniline, carbazole, di-n-propylamine, di-isopropylamine and isopropylethylamine. Examples of the active methylene compound include, but are not particularly limited to, dimethyl malonate, diethyl malonate, methyl acetoacetate, ethyl acetoacetate and acetylacetone. Examples of the imidazole compound include, but are not particularly limited to, imidazole and 2-methylimidazole. Examples of the pyrazole compound include, but are not particularly limited to, pyrazole, 3-methylpyrazole and 3,5-dimethylpyrazole.

Of the thermally dissociable blocking agents (D) described above, at least one compound selected from the group consisting of an oxime compound, an acid amide compound, an amine compound, an active methylene compound and a pyrazole compound is preferably contained in view of availability and the viscosity, reaction temperature and reaction time of the blocked polyisocyanate composition to be produced; methyl ethyl ketoxime, ε-caprolactam, diethyl malonate, ethyl acetoacetate, di-isopropylamine and 3,5-dimethylpyrazole are more preferable; methyl ethyl ketoxime, di-isopropylamine and 3,5-dimethylpyrazole are further preferable; and 3,5-dimethylpyrazole is particularly preferable since low-temperature hardenability and compatibility to an active hydrogen compound serving as a main agent are both obtained. The thermally dissociable blocking agents may be used alone or in combination of two or more.

The blocked polyisocyanate composition contains a diisocyanate trimer having an isocyanurate group and blocked with the thermally dissociable blocking agent (three molecules) in an amount of 10 mass% or more and 60 mass% or less based on the solid content (100 mass%) of the blocked polyisocyanate composition, in view of the hardenability, water resistance and weather resistance of the coating film to be obtained, more preferably 10 mass% or more and 40 mass% or less and further preferably 20 mass% or more and 40 mass% or less. The diisocyanate trimer having an isocyanurate group and blocked with the thermally dissociable blocking agent (three molecules) refers to a diisocyanate trimer having an isocyanurate group and three isocyanate groups contained therein, which are all blocked with the thermally dissociable blocking agent (D) and inactivated. The content of the diisocyanate trimer is measured by a method described in Examples (described later).

The blocked polyisocyanate composition contains a diisocyanate trimer having a biuret group and blocked with the thermally dissociable blocking agent (three molecules), in an amount of preferably 10 mass% or more and 60 mass% or less based on the solid content (100 mass%) of the blocked polyisocyanate composition, in view of the hardenability, water resistance and extensibility of the coating film to be obtained, more preferably 10 mass% or more and 40 mass% or less and further preferably 20 mass% or more and 40 mass% or less. The diisocyanate trimer having a biuret group and blocked with the thermally dissociable blocking agent (three molecules) refers to a diisocyanate trimer having a biuret group and three isocyanate groups, which are all blocked with the thermally dissociable blocking agent (D) and inactivated. The content of the diisocyanate trimer is measured by a method described in Examples (described later).

The blocked polyisocyanate composition preferably contains a polyisocyanate (A) in an amount of 20 mass% or more and 60 mass% based on the solid content (100 mass%) of the blocked polyisocyanate composition and a polycarbonate diol (B) in an amount of 5.0 mass% or more and 55 mass% or less, a hydrophilic compound (C) in an amount of 3.0 mass% or more and 20 mass% or less and a thermally dissociable blocking agent (D) in an amount of 3.0 mass% or more and 20 mass% or less.

The blocked polyisocyanate composition may be diluted with water and/or an organic solvent. Examples of the organic solvent include, but are not particularly limited to, 1-methylpyrrolidone, ethylene glycol monoethyl ether, diethylene glycol monoethyl ether, ethylene glycol monomethyl ether, diethylene glycol monomethyl ether, dipropylene glycol monomethyl ether, propylene glycol monomethyl ether, 3-methoxy-3-methyl-1-butanol, ethylene glycol diethyl ether, diethylene glycol diethyl ether, ethylene glycol dimethyl ether, diethylene glycol dimethyl ether, dipropylene glycol dimethyl ether, propylene glycol dimethyl ether, methyl ethyl ketone, acetone, methyl isobutyl ketone, propylene glycol monomethyl ether acetate, ethanol, methanol, iso-propanol, 1-propanol, iso-butanol, 1-butanol, 2-ethylhexanol, cyclohexanol, ethylene glycol, diethylene glycol, triethylene glycol, propylene glycol, dipropylene glycol, 1,4-butane diol, 1,3-butane diol, ethyl acetate, isopropyl acetate, butyl acetate, toluene, xylene, pentane, iso-pentane, hexane, iso-hexane, cyclohexane, solvent naphtha and mineral spirit. These organic solvents may be used alone or in combination of two or more. In view of the dispersibility in water, an organic solvent having a solubility to water of 5.0 mass% or more is preferable, more specifically, dipropylene glycol dimethyl ether and dipropylene glycol monomethyl ether are preferable.

The blocked polyisocyanate composition diluted with water and/or an organic solvent preferably contains a blocked polyisocyanate in an amount of 10 mass% or more and 45 mass% based on the total amount (100 mass%) of the blocked polyisocyanate composition.

The polyisocyanate composition and blocked polyisocyanate composition can further contain additives such as a hardening accelerating catalyst, an antioxidant, an ultraviolet absorber, a light stabilizer, a pigment, a leveling agent, a plasticizer, rheology control agent in accordance with the purpose and use.

Examples of the hardening accelerating catalyst include, but are not particularly limited to, a tin compound such as dibutyl tin dilaurate, dibutyltin diacetate, dioctyltin dilaurate, dimethyltin dinodecanoate and tin bis(2-ethylhexanoate); a zinc compound such as zinc 2-ethylhexanoate and zinc naphthenate; a titanium compound such as titanium 2-ethylhexanoate and titanium diisopropoxybis(ethylacetonate); a cobalt compound such as cobalt 2-ethylhexanoate and cobalt naphthenate; a bismuth compound such as bismuth 2-ethylhexanoate, bismuth naphthenate; a zirconium compound such as zirconium tetraacetylacetonate, zirconyl 2-ethylhexanoate and zirconyl naphhenate; and an amine compound.

Examples of the antioxidant include, but are not particularly limited to, a hindered phenol compound, a phosphorus compound and a sulfur compound. Examples of the UV absorber include, but are not particularly limited to, a benzotriazole compound, a triazine compound and a benzophenone compound. Examples of the light stabilizer include, but are not particularly limited to, a hindered amine compound, a benzotriazole compound, a triazine compound, a benzophenone compound and benzoate compound. Examples of the pigment include, but are not particularly limited to, titanium oxide, carbon black, indigo, quinacridone, pearl mica and aluminum. Examples of the leveling agent include, but are not particularly limited to, silicone oil. Examples of the plasticizer include, but are not particularly limited to, a phthalate, a phosphoric acid compound and a polyester compound. Examples of the rheology control agent include, but are not particularly limited to, a hydroxyethylcellulose, a urea compound and microgel.

Of the compounds mentioned above, those which are specified as being mainly used in the blocked polyisocyanate composition can be used in the polyisocyanate composition of the embodiment.

[Method for producing polyisocyanate composition]

A method for producing the polyisocyanate composition of the embodiment has a first reaction step of reacting a polyisocyanate (A) obtained from at least one diisocyanate selected from the group consisting of an aliphatic diisocyanate and an alicyclic diisocyanate, a polycarbonate diol (B) and a hydrophilic compound (C). The hydrophilic compound (C) can react with one isocyanate group per molecule thereof.

The reaction temperature of the first reaction step is not particularly limited; however, it is preferably - 20°C or more and 150°C or less in view of suppression of a side reaction and efficiency of production, and more preferably 30°C or more and 120°C or less. In the first reaction step, an organometallic salt of tin, zinc and lead; a tertiary amine compound; and an alcoholate of an alkali metal such as sodium may be used as a catalyst.

The hydrophilic compound (C) may be added after or during the reaction between the polyisocyanate (A) and the polycarbonate diol (B); or simultaneously with the polycarbonate diol (B) at the initiation of the reaction. Alternatively, the hydrophilic compound (C) is added before the reaction, and reacted with a part of isocyanate groups contained in the polyisocyanate (A) and thereafter, further reacted with the polycarbonate diol (B) .

It is preferable that the hydrophilic compound (C) is completely reacted with the polyisocyanate (A) such that an unreacted hydrophilic compound does not remain. Owing to this, the dispersion stability in water of the polyisocyanate composition and the hardenability of the coating film to be obtained tend to be improved.

It is preferable that, in the first reaction step, the polyisocyanate (A) is used in an amount of 30 mass% or more and 70 mass% or less; the polycarbonate diol (B) in an amount of 10 mass% or more and 60 mass% or less; and the hydrophilic compound (C) in an amount of 5.0 mass% or more and 30 mass% or less, based on the total amount (100 mass%) of the polyisocyanate (A), polycarbonate diol (B) and hydrophilic compound (C). If the use amount of the polyisocyanate (A) falls within the above range, the hardenability of the coating film to be obtained tends to be more excellent. If the use amount of the polycarbonate diol (B) falls within the above range, the heat resistance and water resistance of the coating film to be obtained tend to be more excellent. If the use amount of the hydrophilic compound (C) falls within the above range, water dispersibility of the composition and the hardness of the coating film to be obtained tend to be more excellent.

Of the compounds mentioned above, the compounds specified as being mainly used in the method for producing a polyisocyanate composition can be used in the method for producing the blocked polyisocyanate composition of the embodiment.

The method for producing the blocked polyisocyanate composition of the embodiment has a second reaction step of reacting a polyisocyanate (A) obtained from at least one diisocyanate selected from the group consisting of an aliphatic diisocyanate and an alicyclic diisocyanate, a polycarbonate diol (B), a hydrophilic compound (C) and a thermally dissociable blocking agent (D). The hydrophilic compound (C) can be reacted with one isocyanate group per molecule thereof.

The method for the second reaction step is not particularly limited; however, the following methods are mentioned. First, similarly to the first reaction step, a polyisocyanate (A), a polycarbonate diol (B) and a hydrophilic compound (C) are reacted to obtain a polyisocyanate composition. The reaction conditions such as reaction temperature and a catalyst used herein are not particularly limited and the same reaction conditions as in the first reaction step may be employed. The isocyanate group (isocyanate group remains unreacted), which is contained in the polyisocyanate (A) in the polyisocyanate composition after completion of the reaction between the polycarbonate diol (B) and the hydrophilic compound (C), is blocked by the reaction with the thermally dissociable blocking agent (D). The reaction conditions such as reaction temperature and a catalyst used herein are not particularly limited and the same reaction conditions as in the first reaction step may be employed.

As the method for a second reaction step, a method of simultaneously reacting a polyisocyanate (A), a polycarbonate diol (B), a hydrophilic compound (C) and a thermally dissociable blocking agent (D), may be mentioned.

In the second reaction step, all or part of the isocyanate groups contained in the polyisocyanate (A) may be blocked; however, all of the isocyanate groups in the polyisocyanate (A) are preferably blocked. When all isocyanate groups are blocked, the number ratio of the thermally dissociable blocking agent (D) based on the number of unreacted isocyanate functional groups of the polyisocyanate (A), ((number of thermally dissociable blocking agents)/(number of isocyanate functional groups)), is preferably 1.0 or more and 1.5 or less, more preferably 1.0 or more and 1.3 or less and further preferably 1.0 or more and 1.2 or less. In this case, excessive or unreacted thermally dissociable blocking agent (D) remains in the blocked polyisocyanate composition.

The thermally dissociable blocking agent (D) may be added after or during the reaction of the polyisocyanate (A), the polycarbonate diol (B) and/or the hydrophilic group (C); or simultaneously with the polycarbonate diol (B) and/or the hydrophilic compound (C) at the initiation of the reaction. Alternatively, the thermally dissociable blocking agent (D) is added before the reaction, and reacted with a part of the isocyanate groups contained in the polyisocyanate (A) and thereafter, further reacted with the polycarbonate diol (B) and/or the hydrophilic compound (C). Of these addition timings, the timing of adding the thermally dissociable blocking agent (D) after the reaction of the polyisocyanate (A), polycarbonate diol (B) and hydrophilic compound (C), is preferable.

In the second reaction step, the polyisocyanate (A) is preferably contained in an amount of 20 mass% or more and 60 mass% or less; the polycarbonate diol (B) in an amount of 5.0 mass% or more and 55 mass% or less; the hydrophilic compound (C) in an amount of 3 mass% or more and 20 mass% or less; and the thermally dissociable blocking agent (D) in an amount of 3.0 mass% or more and 20 mass% or less, based on the total amount of the polyisocyanate (A), polycarbonate diol (B), hydrophilic compound (C) and thermally dissociable blocking agent (D). If the use amount of the polyisocyanate (A) falls within the above range, the hardenability of the coating film to be obtained tends to be more excellent. If the use amount of the polycarbonate diol (B) falls within the above range, the heat resistance and water resistance of the coating film to be obtained tend to be more excellent. If the use amount of the hydrophilic compound falls within the above range, the water dispersibility of the composition and the hardness of the coating film to be obtained tend to be more excellent.

The reaction in the second reaction step may be carried out in the absence of a solvent. If necessary, the reaction may be carried out in an organic solvent nonreactive with a compound having an isocyanate group. Such an organic solvent is not particularly limited; however, the organic solvent contained in the polyisocyanate composition or the blocked polyisocyanate composition is mentioned. The organic solvent can be removed after the reaction.

[Resin composition]

The resin composition according to the embodiment contains at least one composition selected from the group consisting of the polyisocyanate composition according to the embodiment; the blocked polyisocyanate composition according to the embodiment; a polyisocyanate composition produced by the method for producing a polyisocyanate composition according to the embodiment; and a blocked polyisocyanate composition produced by the method for producing a blocked polyisocyanate composition according to the embodiment, and an active hydrogen compound. Since the resin composition contains an active hydrogen compound, an isocyanate group contained in the polyisocyanate composition and/or blocked polyisocyanate composition reacts with active hydrogen contained in the active hydrogen compound in various conditions, with the result that a hardened material having excellent water resistance, heat resistance, contamination resistance, extensibility and surface smoothness can be obtained.

<Active hydrogen compound>

An active hydrogen compound (hereinafter referred to also as "polyvalent active hydrogen compound") is not particularly limited as long as it has two or more active hydrogen groups bound in a molecule. Examples thereof include a polyamine, an alkanolamine, a polythiol and a polyol. Of these, a polyol is preferable.

Examples of the polyamine include, but are not particularly limited to, a diamine such as ethylenediamine, propylenediamine, butylenediamine, triethylenediamine, hexamethylenediamine, 4,4'-diaminodicyclohexylmethane, piperazine, 2-methylpiperazine and isophoronediamine; a linear polyamine having three or more amino groups, such as bishexamethylene triamine, diethylene triamine, triethylene tetramine, tetraethylene pentamine, pentamethylene hexamine and tetrapropylene pentamine; and a cyclic polyamine such as 1,4,7,10,13,16-hexaazacyclo-octadecane, 1,4,7,10-tetraazacyclo-decane, 1,4,8,12-tetraazacyclo-pentadecane and 1,4,8,11-tetraazacyclo-tetradecane.

Examples of the alkanolamine include, but are not particularly limited to, monoethanolamine, diethanolamine, aminoethylethanolamine, N-(2-hydroxypropyl)ethylenediamine, mono-, di-(n-or iso- )propanolamine, ethylene glycol-bis-propylamine, neopentanolamine and methylethanolamine.

Examples of the polythiol include, but are not particularly limited to, bis-(2-hydrothioethyloxy)methane, dithioethylene glycol, dithioerythritol and dithiothreitol.

Examples of the polyol include, but are not particularly limited to, a polyester polyol, a polycaprolactone, an acrylic polyol, a polyether polyol, a polyolefin polyol, a fluorine polyol, a polycarbonate polyol and an epoxy resin.

The polyester polyol is not particularly limited; however, for example, a product obtained by a condensation reaction between a single dibasic acid or a mixture thereof and a single polyhydric alcohol or a mixture thereof, is mentioned. The dibasic acid is not particularly limited; however, at least one dibasic acid selected from the group consisting of carboxylic acids such as succinic acid, adipic acid, sebacic acid, dimer acid, maleic anhydride, phthalic anhydride, isophthalic acid and terephthalic acid, is mentioned. The polyhydric alcohol is not particularly limited; however, at least one polyhydric alcohol selected from the group consisting of ethylene glycol, propylene glycol, diethylene glycol, neopentyl glycol, trimethylolpropane and glycerin, is mentioned.

The polycaprolactone is not particularly limited; however, a product obtained by a ring-opening polymerization of $\varepsilon$-caprolactone using a polyhydric alcohol, is mentioned.

The acrylic polyol is not particularly limited; however, a product obtained by copolymerization between a single ethylenic unsaturated bond-containing monomer having a hydroxy group or a mixture thereof and another ethylenic unsaturated bond-containing monomer (copolymerizable with the above ethylenic unsaturated bond-containing monomer) or a mixture thereof, is mentioned. Examples of the ethylenic unsaturated bond-containing monomer having a hydroxy group include, but are not particularly limited to, hydroxyethyl acrylate, hydroxypropyl acrylate, hydroxybutyl acrylate, hydroxyethyl methacrylate, hydroxypropyl methacrylate and hydroxybutyl methacrylate. Of these, hydroxyethyl acrylate and hydroxyethyl methacrylate are preferable.

Examples of the "another" ethylenic unsaturated bond-containing monomer (copolymerizable with the above ethylenic unsaturated bond-containing monomer) include, but are not particularly limited to, an acrylate such as methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate and phenyl acrylate; a methacrylate such as methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate and phenyl methacrylate; an unsaturated carboxylic acid such as acrylic acid, methacrylic acid, maleic acid and itaconic acid; an unsaturated amide such as acrylamide, methacrylamide, N,N-methylenebisacrylamide, diacetone acrylamide, diacetone methacrylamide, amide maleate and maleimide; a vinyl monomer such as glycidyl methacrylate, styrene, vinyl toluene, vinyl acetate, acrylonitrile and dibutyl fumarate; and a vinyl monomer having a hydrolyzable silyl group, such as vinyltrimethoxysilane, vinylmethyldimethoxysilane and $\gamma$-(meth)acryloxypropyltrimethoxysilane.

Examples of the polyether polyol include, but are not particularly limited to, a polyether polyol obtained by adding an alkylene oxide such as ethylene oxide, propylene oxide, butylene oxide, cyclohexene oxide and styrene oxide, which may be used alone or as a mixture, to a polyvalent hydroxy compound, which may be used alone or as a mixture, using a hydroxide of e.g., lithium, sodium, potassium or a strong basic catalyst such as an alcoholate and an alkylamine; a polyether polyol obtained by reacting an alkylene oxide with a multifunctional compound such as ethylene diamine; and a polymer polyol obtained by polymerizing an acrylamide with a polyether as mentioned above used as a medium. Examples of the polyvalent hydroxy compound include a sugar alcohol compound such as diglycerin, ditrimethylolpropane, pentaerythritol, dipentaerythritol, erythritol, D-threitol, L-arabinitol, ribitol, xylitol, sorbitol, mannitol, galactitol and rhamnitol; a monosaccharide such as arabinose, ribose, xylose, glucose, mannose, galactose, fructose, sorbose, rhamnose, fucose and ribodesose; a disaccharide such as trehalose, sucrose, maltose, cellobiose, gentiobiose, lactose and melibiose; a trisaccharide such as raffinose, gentianose and melezitose; and a tetrasaccharide such as stachyose.

Examples of the polyolefin polyol include, but are not particularly limited to, a polybutadiene having two or more hydroxy groups, a hydrogenated polybutadiene, polyisoprene and a hydrogenated polyisoprene.

The fluorine polyol refers to a polyol containing fluorine in a molecule. Examples thereof include copolymers of e.g., fluoroolefin, cyclovinyl ether, hydroxyalkyl vinyl ether and vinyl monocarboxylate, disclosed in Japanese Patent Laid-Open No. S57-34107 and Japanese Patent Laid-Open No. S61-27531.

Examples of the polycarbonate polyol include, but are not particularly limited to, a product obtained by polycondensation of a low molecular weight carbonate compound such as a dialkyl carbonate, e.g., dimethyl carbonate; an alkylene carbonate, e.g., ethylene carbonate; and a diarylcarbonate e.g., diphenyl carbonate, and a low molecular-weight polyol used in a polyester polyol as mentioned above.

Examples of the epoxy resin include, but are not particularly limited to, a Novolak epoxy resin, a glycidyl ether epoxy resin, a glycol ether epoxy resin, an epoxy resin of an aliphatic unsaturated compound, an epoxy resin of a fatty acid ester, an epoxy resin of a polycarboxylic acid ester, an aminoglycidyl epoxy resin, a β-methylepichloro epoxy resin, a cyclic oxirane epoxy resin, a halogen epoxy resin and a resorcin epoxy resin.

The hydroxy value of a polyol is not particularly limited. However, in view of crosslinking density and mechanical properties of a hardened material, the hydroxy value per resin composition is preferably 10 mgKOH/g or more and 300 mgKOH/g or less, more preferably 20 mgKOH/g or more and 250 mgKOH/g or less and further preferably 30 mgKOH/g or more and 200 mgKOH/g or less. The hydroxy value of a polyol is measured in accordance with the method for measuring hydroxy value of a polycarbonate diol, described in Examples (later described).

In the resin composition, the ratio of the number of isocyanate functional groups and blocked isocyanate groups contained in the polyisocyanate and the blocked polyisocyanate of the resin composition based on the number of active hydrogen groups contained in the active hydrogen compound of the resin composition is not particularly limited; however, the ratio is preferably 1/10 or more and 10/1 or less, more preferably 1/8 or more and 8/1 or less and further preferably 1/6 or more and 6/1 or less. The ratio can be determined in accordance with the method for determining the ratio of an isocyanurate group, described in Examples (later described).

The resin composition may contain another hardener such as a melamine hardener and an epoxy hardener. Examples of the melamine hardener include, but are not particularly limited to, completely alkyl-etherified melamine resin, a methylol-group based melamine resin and an imino-group based melamine resin partly having an imino group. When a melamine hardener is used in combination, it is effective to add an acidic compound. Examples of the acidic compound include a carboxylic acid, a sulfonic acid, an acidic phosphate and a phosphite.

Examples of the carboxylic acid include, but are not particularly limited to, acetic acid, lactic acid, succinic acid, oxalic acid, maleic acid and decanedicarboxylic acid. Examples of the sulfonic acid include, but are not particularly limited to, paratoluenesulfonic acid, dodecylbenzenesulfonic acid and dinonylnaphthalenedisulfonic acid. Examples of the acidic phosphate include, but are not particularly limited to, dimethyl phosphate, diethyl phosphate, dibutyl phosphate, dioctyl phosphate, dilauryl phosphate, monomethyl phosphate, monoethyl phosphate, monobutyl phosphate and monooctyl phosphate. Examples of the phosphite include, but are not particularly limited to, diethyl phosphite, dibutyl phosphite, dioctyl phosphite, dilauryl phosphite, monoethyl phosphite, monobutyl phosphite, monooctyl phosphite and monolauryl phosphite.

Examples of the epoxy hardener include, but are not particularly limited to, an aliphatic polyamine, an alicyclic polyamine, an aromatic polyamine, an acid anhydride, a phenol Novolak, a polymercaptan, an aliphatic tertiary amine, an aromatic tertiary amine, an imidazole compound and a Lewis acid complex.

The resin composition may further contain other additives in accordance to use and purpose. Examples of the additives include, but are not particularly limited to, hardenable compositions such as a coating composition, a pressure-sensitive adhesive composition, an adhesive composition and a casting composition; a surface preparation agent composition such as a textile treating agent; an elastomer composition; a cross-linking agent such as a composition for a foam; and a modifier.

The method for producing a resin composition is not particularly limited. For example, a method of adding an active hydrogen compound to a main component, i.e., the polyisocyanate composition or blocked polyisocyanate composition according to the embodiment and mixing them, is mentioned.

[Hardened material]

The hardened material of the embodiment can be obtained by hardening a resin composition as mentioned above. The resin composition is hardened by reacting an isocyanate group contained in a polyisocyanate composition contained in the resin composition with active hydrogen contained in an active hydrogen compound. In this manner, the hardened material can be obtained. When a resin composition containing a blocked polyisocyanate composition is used, a block bound to an isocyanate group contained in the blocked polyisocyanate composition contained in the resin composition dissociates by heating the resin composition and the isocyanate group dissociated reacts with active hydrogen of the active hydrogen compound to successfully obtain a hardened material.

[Use]

The polyisocyanate composition and blocked polyisocyanate composition according to the embodiment are used, for example, as a hardenable composition such as a coating composition, a pressure-sensitive adhesive composition, an adhesive composition and a casting composition; a surface preparation agent composition such as a textile treating agent; an elastomer composition; a cross-linking agent such as a composition for a foam; a modifier; and an additive.

The coating composition is not particularly limited; however, it is suitably used as a primer, an intermediate coat and a finish coat which are applied to various materials by roll painting, curtain flow painting, spray painting, electrostatic painting or bell painting. The coating composition is used further for providing e.g., decoration, weather resistance, acid resistance, rust prevention, chipping resistance and tightness, to e.g., a precoated metal including an anticorrosion steel sheet, automotive painting and plastic coating.

Examples of the use of the pressure-sensitive adhesive composition and adhesive composition include, but are not particularly limited to, an automobile, a building material, a home appliance, woodworking and a laminate for a solar cell. In particular, in an optical element for a liquid crystal display of a home electric appliance such as TV, PC, a digital camera and a mobile phone, in order to express various functions, it is necessary to laminate an adherend, i.e., film and a plate. Since the film and plate of an adherend are required to have sufficient pressure-sensitive adhesiveness and adhesiveness, these are preferable as examples of use of the pressure-sensitive adhesive composition and adhesive composition of the embodiment.

Examples of the adherend to which the hardenable composition can be applied include, but are not particularly limited to, glass; a metal such as aluminum, iron, zinc steel plate, copper and stainless steel; a porous component such as wood, paper, mortar and stone; a material with fluorine coating, urethane coating and acrylic urethane coating; a hardened sealing material such as a silicone hardened material, a modified silicone hardened material and a urethane hardened material; a rubber such as vinyl chloride, a natural rubber and a synthetic rubber; a leather such as a natural leather and an artificial leather; a fiber such as a plant fiber, an animal fiber, a carbon fiber and a glass fiber; a nonwoven fabric; a film and plate formed of e.g., a polyester resin, an acrylic resin, a polycarbonate resin, a triacetyl cellulose resin and a polyolefin resin; a UV hardenable acrylic resin layer; and an ink such as a printing ink and a UV ink.

Examples

Now, the embodiment will be more specifically described by way of Examples and Comparative Examples; however, the embodiment should not be limited by Examples and Comparative Examples as long as it falls within the scope of the claims. The physical properties and evaluations in Examples and Comparative Examples were carried out as follows.

(Physical property 1) Yield

The yield of a polyisocyanate precursor is obtained by subjecting the polyisocyanate precursor as a sample to measurement of reaction solution refractive index.

(Physical property 2) Viscosity

The viscosity of a polyisocyanate precursor at 25°C was obtained by Type E viscometer, RE-80U (manufactured by Toki Sangyo Co., Ltd.) and using the polyisocyanate precursor as a sample.

(Physical property 3) Concentration of isocyanate group

A polyisocyanate precursor (1 to 3 g) was weighed out (Wg) and placed in a conical flask, and then toluene (20 mL) was added to dissolve the polyisocyanate. Thereafter, a 2N di-n-butylamine toluene solution (10 mL) was added, mixed and allowed to stand still at room temperature for 15 minutes. Isopropyl alcohol (70 mL) was added and mixed. This solution was titrated with a 1N hydrochloric acid solution (factor F) in the presence of an indicator. The titration value was regarded as V2 (mL). The same operation was repeated without using a polyisocyanate and the titration value was regarded as (V1) mL. In accordance with the following expression (1), the content of an isocyanate group in the polyisocyanate was calculated.

$$\text{Isocyanate-group content (mass\%)} = (V1-V2) \times F \times 42/(W \times 1000) \times 100 \cdots (1)$$

(Physical property 4) Number average molecular weight of polyisocyanate precursor

A polyisocyanate precursor was subjected as a sample to gel permeation chromatography using the following apparatus to obtain the number average molecular weight of the polyisocyanate precursor as a polystyrene equivalent number average molecular weight.

Apparatus: HLC-802A (manufactured by Tohso Corporation)
Column: G1000HXL × 1 (manufactured by Tohso Corporation)
G2000HXL × 1 (manufactured by Tohso Corporation)
G3000HXL × 1 (manufactured by Tohso Corporation)
Carrier: Tetrahydrofuran
Flow rate: 0.6 mL/minute
Sample concentration: 1.0 mass%
Injection volume: 20 μL
Temperature: 40°C
Detection method: Differential refractometer

(Physical property 5) Average number of isocyanate functional groups of polyisocyanate precursor

The average number of isocyanate functional groups was obtained using a polyisocyanate precursor as a sample in accordance with the following expression (2).

$$\text{Average number of isocyanate functional group} =$$
$$(\text{polyisocyanate number average molecular weight (Mn)} \times$$
$$\text{isocyanate-group content (mass\%)} \times 0.01)/42 \cdots (2)$$

(Physical property 6) Concentrations of components

The concentration of a component: diisocyanate trimer having an unreacted isocyanurate group in a polyisocyanate composition; the concentration of a component: diisocyanate trimer having an unreacted biuret group in a polyisocyanate composition; the concentration of a component: diisocyanate trimer having an isocyanurate group and blocked with a blocking agent (three molecules) in a blocked polyisocyanate composition; the concentration of a component: diisocyanate trimer having a biuret group and blocked with a blocking agent (three molecules) in a blocked polyisocyanate composition; the concentration of a component: diisocyanate trimer having an unreacted isocyanurate group in a polyisocyanate precursor; and the concentration of a component: diisocyanate trimer having an unreacted biuret group in a polyisocyanate precursor, were obtained.

A polyisocyanate composition was subjected as a sample to gel permeation chromatography in the same manner as in Physical property 4: Number average molecular weight of polyisocyanate precursor, to obtain the area ratio of the diisocyanate trimer having an unreacted isocyanurate group or biuret group based on the total area of the polyisocyanate composition. In accordance with this, using a blocked polyisocyanate composition as a sample, the area ratio of the diisocyanate trimer having an isocyanurate group or biuret group and blocked with a blocking agent (three molecules) was obtained. Further, with respect to a polyisocyanate precursor, the concentration of a component: a diisocyanate trimer having an unreacted isocyanurate group or biuret group was obtained in the same manner as in the case of the polyisocyanate composition.

(Physical property 7) Molar ratio of functional groups

The molar ratio of functional groups: isocyanurate group/ (isocyanurate group + urethane group), and the molar ratio of functional groups: biuret group/(biuret group + urethane group), were obtained.

A proton nuclear magnetic resonance spectrum was measured by using a polyisocyanate composition as a sample, FT-NMR AVANCE600 manufactured by Bruker and deuterated chloroform CDCl$_3$ as a solvent (concentration: 5 mass%), at 600 MHz and cumulated number: 256 to check the molar ratio of functional groups: an isocyanurate group and a urethane group. All protons at the β position and γ position derived from HDI were used as a reference, the following ratios were obtained. As to an isocyanurate group, the area ratio of the signal of a hydrogen atom of the methylene group derived from HDI, which is adjacent to an isocyanurate group at around 3.85 ppm was obtained; As to a biuret group, the area ratio of the signal of a hydrogen atom bound to nitrogen of a biuret bond at around 7.10 ppm was obtained; and As to a urethane group, the area ratio of the signal of a hydrogen atom bound to nitrogen of a urethane bond at around 4.90 ppm was obtained. Assuming that the molar number of functional group of the isocyanurate group was regarded as 1/6 area ratio; whereas, the molar number of functional group of the biuret group was regarded as 1/2 area ratio, the molar ratio was obtained.

(Physical property 8) Number average molecular weight of polycarbonate diol

The number average molecular weight of a polycarbonate diol was obtained (using a polycarbonate diol as a sample) in accordance with the following expression (3). Note that, the hydroxy value of the polycarbonate diol was obtained in accordance with the following (Physical property 9).

$$\text{Number average molecular weight} = 2/ \text{ (hydroxy value}$$

$$\text{of polycarbonate diol} \times 10^{-3}/56.11) \cdots (3)$$

(Physical property 9) Hydroxy value of polycarbonate diol

The hydroxy value of a polycarbonate diol was obtained (using a polycarbonate diol as a sample) in accordance with JIS K 0070: 1992. To describe it more specifically, acetic anhydride (12.5 g) was diluted in a measuring cylinder with pyridine up to 50 mL in total to prepare an acetylating reagent. Subsequently, polycarbonate diol (2.5 to 5.0 g) produced in a synthesis example was weighed out in a 100 mL eggplant flask. To the eggplant flask, the acetylating reagent (5 mL) and toluene (10 mL) were added by transfer pipette. Thereafter, a cooling pipe was equipped to the flask, the mixture was stirred for one hour while heating at 100°C. Distilled water (2.5 mL) was added by a transfer pipette, the mixture was further stirred for 10 minute while heating. After the mixture was cooled for 2 to 3 minutes, ethanol (12.5 mL) was added to the mixture and 2 to 3 droplets of phenolphthalein were added as an indicator. Titration was carried out with 0.5 mol/L ethanolic potassium hydroxide.
As a blank test, the acetylating reagent (5 mL), toluene (10 mL) and distilled water (2.5 mL) were placed in a 100 mL eggplant flask and the mixture was stirred for 10 minutes while heating. Titration was carried out in the same manner as above. Based on the results, the hydroxy value was calculated in accordance with the following expression (4):

$$\text{OH value (mg-KOH/g)} = \{(b-a) \times 28.05 \times f\}/e \cdots (4)$$

In the expression (4), a represents titer (mL) of a sample; b represents the titer of the blank (mL); e represents the mass (g) of the sample; and f represents a factor of a titrant.

(Physical property 10) Copolymer composition of polycarbonate diol

The copolymer composition of a polycarbonate diol was determined using a polycarbonate diol as a sample. In a 100 mL eggplant flask, the sample (1 g) was weighed out and ethanol (30 g) and potassium hydroxide (4 g) were added. The mixture was reacted at 100°C for one hour. To the mixture cooled to room temperature, 2 to 3 droplets of phenolphthalein was added as an indicator. The mixture was neutralized with hydrochloric acid. After the mixture was cooled in the refrigerator for one hour, the salt precipitated was removed by filtration. Analysis was performed by gas chromatography. The analysis was performed by gas chromatography-GC-14 B (manufactured by Shimadzu Corporation) equipped with DB-WAX (manufactured by J&W) as a column, and employing diethylene glycol diethyl ester as an internal standard and FID as a detector. Note that, as the temperature rising profile of the column, the temperature was maintained at 60°C for 5 minutes and raised at a rate of 10°C/min to 250°C.

(Physical property 11) Molar ratio of a structural unit derived from polycarbonate diol based on a structural unit derived from a hydrophilic compound (polycarbonate diol/hydrophilic compound)

A proton nuclear magnetic resonance spectrum was measured using a polyisocyanate composition as a sample in the same manner as in (Physical property 7) mentioned above. As a result, the area ratio a of the signal of a hydrogen atom bound to nitrogen of a urethane bond at around 4.90 ppm and the area ratio b of the signal of a hydrogen atom of a methoxy group derived from a hydrophilic compound at around 3.37 ppm were obtained. The molar ratio of the structural unit derived from the polycarbonate diol based on the structural unit derived from the hydrophilic compound was calculated in accordance with the following expression (5):

$$\text{Molar ratio of structural unit derived from polycarbonate}$$

$$\text{diol based on structural unit derived from hydrophilic}$$

$$\text{compound} =$$

$$\{(a-(b/3))/2\}/(b/3) \cdots (5)$$

(Physical property 12) Average number of isocyanate functional groups in polyisocyanate composition

The average number of isocyanate functional groups in a polyisocyanate composition was obtained (by using the polyisocyanate composition as a sample) in the same manner as in (Physical property 5): Average number of isocyanate functional groups of polyisocyanate precursor.

(Evaluation 1) Dispersion stability in water

<1> The masses of 100 mL flask and Yoshino paper were measured.
<2> Each of the polyisocyanate compositions or blocked polyisocyanate compositions obtained in Examples and Comparative Examples were placed in a 100 mL flask so as to contain a solid content of 16 g and deionized water (24 g) was added thereto.
<3> The solution in the 100 mL flask was stirred by use of a propeller blade at 200 rpm for 3 minutes and filtered by the Yoshino paper measured in mass in <1>.
<4> The filtration residue remaining on the Yoshino paper and the residue remaining in the 100 mL flask were combined and heated in a dryer of 105°C for one hour and the mass (g) was obtained.
<5> The ratio of a polyisocyanate-containing composition dispersed in water was obtained in accordance with the following expression (6).

$$\text{Water dispersion ratio (mass\%)} = 100\% - (\text{total mass}$$

$$\text{(g) of 100 mL flask containing the residue obtained in}$$

$$\text{step <4> and Yoshino paper- total mass (g) of 100 mL}$$

$$\text{flask containing the residue obtained in step <1>)/ (mass}$$

$$\text{(g) of polyisocyanate-containing composition} \times \text{non-}$$

$$\text{volatile content (mass\%))} \times 100\% \cdots (6)$$

Evaluation criteria were as follows:

○: 80 mass% or more: dispersion stability in water is satisfactory
×: less 80 mass%, dispersion stability in water is low.

(Evaluation 2) Water resistance

To each of the polyisocyanate compositions or blocked polyisocyanate compositions obtained in Examples and Comparative Examples, SETAL6510 (acryl dispersion, manufactured by Nuplex Resins, hydroxy concentration: 4.2% (based on a resin), resin content: 42%) was added so as to satisfy a functional group ratio (NCO/OH) = 1.00 and the mixture was diluted with water so as to obtain a solid content of 35 mass%. The resulting coating composition was applied by means of an applicator to a glass plate so as to have a resin film thickness of 40 $\mu$m. The coating film was heated at 80°C for 60 minutes in Examples 28 to 42 and Comparative Examples 10 to 14; and at 160°C for 60 minutes in Examples 43 to 54 and Comparative Examples 15 to 19.
On the coating film obtained, a rubber ring of 2 cm in diameter was mounted and water was added dropwise within the ring. A watch glass was mounted on the top of the ring in order to prevent vaporization and allowed to stand still at 23°C for 2 days. Two days later, water was removed. The haze was measured before and after dropwise addition of water. The haze value of the coating film was measured in accordance with JIS K7361 by a Haze Meter (trade name) manufactured by Suga Test Instruments Co., Ltd..

Evaluation criteria were as follows. Note that, if e.g., precipitation occurred, the coating composition was regarded as "unable to evaluate".

○: Difference in haze value before and after dropwise addition of water is less than 0.5: water resistance is satisfactory.
×: Difference in haze value before and after dropwise addition of water is 0.5 or more: water resistance is low.

(Evaluation 3) Strength in high temperature

Each of the polyisocyanate compositions or blocked polyisocyanate compositions obtained in Examples and Comparative Examples was diluted with water so as to obtain a solid content of 2 mass%. In the resulting aqueous dispersion solution, a polyester nonwoven fabric having a basis weight of 6 g/m$^3$ was soaked and coated with the aqueous dispersion so as to hold the dispersion solution 1.5 times as large as the initial mass of the nonwoven fabric and thereafter heated at 150°C, for 5 minutes. After heating, the resulting nonwoven fabric was subjected to measurement of breaking strength in the following conditions.

Apparatus: TENSILON RTE-1210 (manufactured by A&D)
Tensile speed: 20 mm/min
Sample dimensions: 20 mm in length × 10 mm in width
Temperature: 200°C

Evaluation criteria were as follows. Note that, if precipitation occurred in a water dilution solution as mentioned above, the water dilution solution was regarded as "unable to evaluate"

◎: Breaking strength is 2.4 MPa or more: strength in high temperature is extremely satisfactory.
○: Breaking strength is 2.0 MPa or more and less than 2.4 MPa: strength in high temperature is satisfactory.
×: Breaking strength is less than 2.0 MPa, strength in high temperature is low.

(Evaluation 4) Weather resistance

A solvent-based two-pack urethane paint (trade name, "Mightylac (white)", manufactured by Nipponpaint) was applied by spray to an aluminum plate (150 mm × 75 mm × 1 mm, mode: A1050P (JIS H4000), manufactured by Testpiece) so as to obtain a dry-film thickness of 50 μm. Thereafter, the plate was allowed to stand still at 23°C and 50% humidity for two weeks. The surface of the plate was polished with No. 1000 sand paper to prepare a white board.
A coating film was formed in the same manner as in (Evaluation 2) except that the white board obtained above was used as a plate to be coated and subjected to an accelerated weather resistance test using Super Xenon Weather Meter (manufactured by Suga Test Instruments Co., Ltd.) in the conditions described in JIS K5600-7-7. After the accelerated weather resistance test, 60° glossiness was measured in accordance with JIS Z8741 and gloss retention was calculated based on the following expression (7):

$$\text{Gloss retention (\%)} = \text{Gloss at measurement/initial gloss} \times 100 \cdots (7)$$

Evaluation criteria were as follows.

◎: Gloss retention after 1500 hours is 80% or more: weather resistance is extremely satisfactory.
○: Gloss retention after 1500 hours is 70% or more and less than 80%: weather resistance is satisfactory.
×: Gloss retention after 1500 hours is less than 70%: weather resistance is low.

(Evaluation 5) Hardenability

A polypropylene plate was coated in the same manner as in (Evaluation 2) except that the plate to be coated was changed to the polypropylene plate and the coating film was hardened by heating at 80°C for 30 minutes and soaked in acetone at 20°C for 24 hours. The mass ratio of the portion of the coating film remaining undissolved based on the coating film before soaking was calculated.

Evaluation criteria were as follows.

◎: 80% or more: hardenability is extremely satisfactory.
○: 70% or more and less than 80%: hardenability is very satisfactory.
△: 60% or more and less than 70 %: hardenability is satisfactory.
×: less than 60%; hardenability is low.

(Evaluation 6) Bubble removability during hardening

Coating was carried out in the same manner as in (Evaluation 2) mentioned above. The coating film was hardened by heating at 80°C for 30 minutes and appearance of the film was visually observed.

Evaluation criteria were as follows.

◎: The number of remaining bubbles per 100 $cm^2$ of the coating film is less than 3: bubble removability is extremely satisfactory.
○: The number of remaining bubbles per 100 $cm^2$ of the coating film is 3 or more and 10 or less: bubble removability is satisfactory.
×: The number of remaining bubbles per 100 $cm^2$ of the coating film is 11 or more: bubble removability is low.

(Evaluation 7) Extensibility

A polypropylene plate was coated in the same manner as in (Evaluation 2) except that the plate to be coated was changed to the polypropylene plate, and the coating film was hardened by heating at 80°C for 30 minutes. The coating film was peeled to obtain pieces having the following dimensions. The breaking elongation of the coating film piece was measured by TENSILON (trade name) RTE-1210 manufactured by A&D. The measurement conditions were as follows:

Measurement condition:
Tensile speed: 20 mm/min, Sample dimensions: 20 mm in length $\times$ 10 mm in width $\times$ 40 $\mu$m in thickness, temperature: 23°C, humidity: 50%

Evaluation criteria were as follows:

◎: Breaking elongation of coating film is 50% or more
○: Breaking elongation of coating film is 20% or more and less than 50%
×: Breaking elongation of coating film is less than 20%

[Synthesis Example 1]

Polyisocyanate precursor a

A four-neck flask equipped with a stirrer, a thermometer, a reflux pipe, a nitrogen blowing pipe and a drip funnel was purged with nitrogen so as to have a nitrogen atmosphere, charged with HDI (1000 g). The temperature of a reactor while stirring was held at 70°C. To the reactor, tetramethylammonium caprylate was added. When a yield became 40%, phosphoric acid was added to terminate the reaction. The reaction solution was filtered and then, unreacted HDI was removed by a thin film evaporator to obtain polyisocyanate precursor a. The polyisocyanate precursor a obtained had a viscosity at 25°C of 2700 mPa·s, an isocyanate-group concentration of 21.7%, a number average molecular weight of 660 and an average number of isocyanate functional groups of 3.4. The (component) concentration of a diisocyanate trimer of an isocyanurate group was 50 mass%.

[Synthesis Example 2]

Polyisocyanate precursor b

The same apparatus as used in Synthesis Example 1 was charged with HDI (700 g) and IPDI (300 g). The temperature of a reactor while stirring was held at 70°C. To the reactor, tetramethylammonium caprylate was added.

When a yield became 37%, phosphoric acid was added to terminate the reaction. The reaction solution was filtered and then, unreacted HDI and IPDI were removed by a thin film evaporator to obtain polyisocyanate precursor b. The polyisocyanate precursor b obtained had a viscosity at 25°C of 16500 mPa· s, an isocyanate-group concentration of 21.0%, a number average molecular weight of 660 and an average number of isocyanate functional groups of 3.3. The (component) concentration of a diisocyanate trimer of an isocyanurate group was 53 mass%.

[Synthesis Example 3]

Polyisocyanate precursor c

The same apparatus as used in Synthesis Example 1 was charged with HDI (1000 g). The temperature of a reactor was held at 70°C while stirring the reaction. To the reactor, tetramethylammonium caprylate was added. When a yield became 25%, phosphoric acid was added to the reaction solution to terminate the reaction. The reaction solution was filtered and then unreacted HDI was removed by a thin film evaporator to obtain polyisocyanate precursor c. The polyisocyanate precursor c obtained had a viscosity at 25°C of 1300 mPa· s, an isocyanate-group concentration of 23.1%, a number average molecular weight of 590 and an average number of isocyanate functional groups of 3.0. The (component) concentration of a diisocyanate trimer of an isocyanurate group was 68 mass%.

[Synthesis Example 4]

Polyisocyanate precursor d

The same apparatus as used in Synthesis Example 1 was charged with HDI (700 g), trimethyl phosphate (150 g), methyl cellosolve acetate (150 g) and water (8.3 g). The temperature of a reactor was maintained at 90°C while stirring the reaction solution. Two hours later, the temperature of the reaction solution was raised to 160°C and further maintained at the same temperature for 2 hours. Thereafter, the reaction solution was cooled to terminate the reaction. The reaction solution was filtered and then unreacted HDI was removed by a thin film evaporator to obtain polyisocyanate precursor d. The polyisocyanate precursor d obtained had a viscosity at 25°C of 1800 mPa· s, an isocyanate-group concentration of 23.4%, a number average molecular weight of 580 and an average number of isocyanate functional groups of 3.2. The (component) concentration of a diisocyanate trimer having a biuret group was 48 mass%.

[Synthesis Example 5]

Polycarbonate diol A

A 2L separable flask equipped with a stirrer, a thermometer and an Oldershaw with a vacuum jacket having a reflux head at the top was charged with 1,5-pentane diol (382 g), 1,6-hexane diol (433 g) and ethylene carbonate (650 g). After they were dissolved by stirring at 70°C, a lead acetate trihydrate (0.015 g) serving as a catalyst was added to the reaction solution. The flask was heated in an oil bath set at 175°C and reacted 12 hours at an internal temperature of the flask of 140°C, a degree of vacuum of 1.0 to 1.5 kPa while removing a part of fraction from the reflux head at a reflux ratio of 4. Thereafter, the Oldershaw column was replaced by a single distillation apparatus and the flask was heated in an oil bath set at 180°C. The internal temperature of the flask was reduced to 140 to 150°C and the vacuum degree was reduced to 0.5 kPa to remove a diol and ethylene carbonate remaining in the separable flask. Thereafter, the setting of the temperature of the oil bath was raised to 185°C and the reaction was carried out at an internal temperature of the flask at 160 to 165°C for further 4 hours while removing the generating diol. As a result of the reaction, polycarbonate diol A (viscous liquid at normal temperature) was obtained. Polycarbonate diol A obtained had a hydroxy value of 56.1 (molecular weight: 2000) and a copolymer composition of 1,5-pentane diol and 1,6-hexane diol of 50/50 (molar ratio).

[Synthesis Example 6]

Polycarbonate diol B

Polycarbonate diol B was synthesized in the same manner as in Synthesis Example 5 except that after the Oldershaw column was replaced by a single distillation apparatus in Synthesis Example 3, the setting temperature of the oil bath was raised to 185°C to set the internal temperature of the flask at 160 to 165°C and the time for removing the generating diol was set at 2.3 hours. Polycarbonate diol B obtained had a hydroxy value of 113.2 (molecular weight: 1000) and a copolymer composition of 1,5-pentane diol and 1,6-hexane diol of 50/50 (molar ratio).

[Synthesis Example 7]

Polycarbonate diol C

Polycarbonate diol C was synthesized in the same manner as in Synthesis Example 3 except that, after the Oldershaw column was replaced by a single distillation apparatus in Synthesis Example 3, the setting temperature of the oil bath was raised to 185°C to set the internal temperature of the flask at 160 to 165°C and the time for removing the generating diol was set at 1.5 hours. Polycarbonate diol C obtained had a hydroxy value of 224.4 (molecular weight: 500) and a copolymer composition of 1,5-pentane diol and 1,6-hexane diol of 50/50 (molar ratio).

[Synthesis Example 8]

Polycarbonate diol D

After a 2L reactor equipped with a stirrer was charged with 1,6-hexane diol (520 g) and ethylene carbonate (410 g), lead acetate trihydrate (0.009 g) was added as a catalyst. The reactor was connected to a rectifying column charged with regular packing. The reactor was soaked in an oil bath of 210°C and a reaction was carried out at a reaction temperature of 170°C for 20 hours while removing part of a distillate. Thereafter, the reactor was directly connected to a condenser and the temperature of the oil bath was reduced to 190°C. The reaction was carried out for further 8 hours while gradually reducing the pressure. As a result of the reaction, polycarbonate diol D (517 g) was obtained as a while solid at normal temperature. Polycarbonate diol D obtained had a hydroxy value of 56.1 (molecular weight: 2000) .

[Example 1]

Polyisocyanate composition

The same reactor as used in Synthesis Example 1 was charged with polyisocyanate precursor a (100.0 g) obtained in Synthesis Example 1, polycarbonate diol A (103.3 g) obtained in Synthesis Example 3 and a hydrophilic compound, i.e., polyethylene oxide (trade name: "MPG-081", manufactured by Nippon Nyukazai Co., Ltd.)(35.7 g) and a urethanization catalyst (trade name: "Neostann U-810", manufactured by Nitto Kasei Kogyo K.K.)(0.01 g), and maintained 80°C for 4 hours in a nitrogen atmosphere. Thereafter, n-butyl acetate (102.4 g) was added to obtain the polyisocyanate composition of Example 1. In the polyisocyanate composition obtained, the (component) concentration of a diisocyanate trimer of an unreacted isocyanurate group was 21.3 mass%; and the ratio of the functional groups, i.e., isocyanurate group/(an isocyanurate group + urethane group), was 0.60. The molar ratio of the structural unit derived from a polycarbonate diol based on the structural unit derived from a hydrophilic compound was 1.0; and an average number of isocyanate functional groups was 3.6.

[Examples 2 to 15, Comparative Examples 1 to 4]

Polyisocyanate compositions

The reaction was carried out in the same manner as Example 1 except that the types and amounts of polyisocyanate precursors and polycarbonate diols, hydrophilic groups and n-butyl acetate shown in Table 1 were used. The polyisocyanate compositions obtained each had the (component) concentration of a diisocyanate trimer of an unreacted isocyanurate group or biuret group; the molar ratio of functional groups, i.e., an isocyanurate group/(an isocyanurate group + urethane group), or the molar ratio of functional groups, i.e., biuret group/(biuret group + urethane group); the molar ratio of the structural unit derived from a polycarbonate diol based on the structural unit derived from a hydrophilic compound; and the average number of isocyanate functional groups are shown in Table 1 to Table 3.

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|
| Composition of charged starting materials (g) | Polyisocyanate precursor | A-a | 100.0 | 100.0 | 100.0 | 100.0 | - | - | - | 100.0 | 100.0 |
| | | A-b | - | - | - | - | 100.0 | - | - | - | - |
| | | A-c | - | - | - | - | - | 100.0 | 100.0 | - | - |
| | Polycarbonate diol | B-A | 103.3 | - | - | - | - | - | - | - | - |
| | | B-B | - | 51.7 | - | - | - | - | 21.8 | 12.9 | 25.9 |
| | | B-C | - | - | 25.8 | - | 25.0 | 27.5 | - | - | - |
| | | B-D | - | - | - | 103.3 | - | - | - | - | - |
| | Diol | B-E | - | - | - | - | - | - | - | - | - |
| | | B-F | - | - | - | - | - | - | - | - | - |
| | Hydrophilic compound | C | 35.7 | 35.7 | 35.7 | 35.7 | 34.5 | 37.2 | 29.7 | 53.6 | 53.6 |
| | Urethanization catalyst | E | 0.01 | 0.01 | 0.01 | 0.01 | 0.01 | 0.01 | 0.01 | 0.01 | 0.01 |
| | Diluent | n-Butyl acetate | 102.4 | 80.3 | 69.2 | 102.4 | 68.4 | 70.6 | 56.7 | 71.4 | 76.9 |
| | Polyisocyanate precursor/solid content | | 42% | 53% | 62% | 42% | 63% | 61% | 66% | 60% | 56% |
| | Polycarbonate diol/solid content | | 43% | 28% | 16% | 43% | 16% | 17% | 14% | 7.7% | 14% |
| | Hydrophilic compound/solid content | | 15% | 19% | 22% | 15% | 22% | 23% | 20% | 32% | 30% |
| (Physical property 6) Concentration (mass%) of diisocyanate trimer having unreacted isocyanurate group | | | 21.3 | 27.2 | 31.6 | 21.3 | 15.0 | 41.1 | 55.0 | 32.5 | 29.2 |
| (Physical property 7) Molar functionality ratio of isocyanulate group/(isocyanulate group + urethane group) | | | 0.6 | 0.6 | 0.6 | 0.6 | 0.6 | 0.6 | 0.8 | 0.7 | 0.7 |
| (Physical property 11) Molar ratio of polycarbonate diol/hydrophilic compound | | | 1.0 | 1.0 | 1.0 | 1.0 | 1.0 | 1.0 | 0.5 | 0.2 | 0.3 |
| (Physical property 12) Average number of isocyanate functional groups | | | 3.6 | 3.6 | 3.6 | 3.6 | 3.5 | 3.3 | 3.1 | 3.1 | 3.1 |

[Table 2]

| | | | Example 10 | Example 11 | Example 12 | Example 13 | Comparative Example 1 | Comparative Example 2 | Comparative Example 3 | Comparative Example 4 |
|---|---|---|---|---|---|---|---|---|---|---|
| Composition of charged starting materials (g) | Polyisocyanate precursor | A-a | 100.0 | 100.0 | 100.0 | 100.0 | 100.0 | 100.0 | 100.0 | - |
| | | A-b | - | - | - | - | - | - | - | - |
| | | A-c | - | - | - | - | - | - | - | 100.0 |
| | Polycarbonate diol | B-A | - | - | - | - | - | - | - | - |
| | | B-B | - | - | 7.8 | - | - | - | - | 54.5 |
| | | B-C | 38.7 | 41.3 | - | 38.7 | - | - | - | - |
| | | B-D | - | - | - | - | - | - | - | - |
| | Diol | B-E | - | - | - | - | 26.9 | - | - | - |
| | | B-F | - | - | - | - | - | 20.7 | - | - |
| | Hydrophilic compound | C | 35.7 | 28.6 | 71.4 | 17.9 | 35.7 | 35.7 | 53.5 | - |
| | Urethanization catalyst | E | 0.01 | 0.01 | 0.01 | 0.01 | 0.01 | 0.01 | 0.01 | 0.01 |
| | Diluent | n-Butyl acetate | 74.7 | 72.8 | 76.8 | 67.1 | 69.7 | 67.0 | 65.8 | 66.2 |
| | Polyisocyanate precursor/solid content | | 57% | 59% | 56% | 64% | 61% | 64% | 65% | 65% |
| | Polycarbonate diol/solid content | | 22% | 24% | 4.4% | 25% | - | - | - | 35% |
| | Hydrophilic compound/solid content | | 20% | 17% | 40% | 11% | 22% | 23% | 35% | - |
| (Physical property 6) Concentration (mass%) of diisocyanate trimer having unreacted isocyanurate group | | | 24.5 | 20.8 | 33.0 | 27..5 | 30.9 | 32.4 | 40.1 | 18.4 |
| (Physical property 7) Molar functionality ratio of isocyanulate group/(isocyanulate group + urethane group) | | | 0.5 | 0.5 | 0.7 | 0.5 | 0.6 | 0.6 | 0.8 | 0.8 |
| (Physical property 11) Molar ratio of polycarbonate diol/hydrophilic compound | | | 1.5 | 2.0 | 0.08 | 3.0 | 1.0 | 1.0 | 0.0 | - |
| (Physical property 12) Average number of isocyanate functional groups | | | 4.1 | 4.3 | 2.8 | 4.5 | 3.6 | 3.5 | 2.4 | 4.2 |

[Table 3]

| | | | Example 14 | Example 15* |
|---|---|---|---|---|
| Composition of charged starting materials (g) | Polyisocyanate precursor | A-d | 100.0 | 100.0 |
| | Polycarbonate diol | B-C | 27.5 | 55.0 |
| | Hydrophilic compound | C | 35.7 | 71.4 |
| | Urethanization catalyst | E | 0.01 | 0.01 |
| | Diluent | n-Butyl acetate | 69.9 | 96.8 |
| | Polyisocyanate precursor/solid content | | 61% | 44% |
| | Polycarbonate diol/solid content | | 17% | 24% |
| | Hydrophilic compound/solid content | | 22% | 32% |
| (Physical property 6) Concentration (mass%) of diisocyanate trimer having unreacted biuret group | | | 28.0 | 8.0 |
| (Physical property 7) Molar functionality ratio of biuret group/(biuret group + urethane group) | | | 0.6 | 0.4 |
| (Physical property 11) Molar ratio of polycarbonate diol/hydrophilic compound | | | 1.0 | 1.0 |
| (Physical property 12) Average number of isocyanate functional groups | | | 3.2 | 3.8 |
| * for reference | | | | |

The symbols in Table 1 to Table 3 represent the following substances.

A-a: Polyisocyanate precursor a of Synthesis Example 1
A-b: Polyisocyanate precursor b of Synthesis Example 2
A-c: Polyisocyanate precursor c of Synthesis Example 3
A-d: Polyisocyanate precursor d of Synthesis Example 4
B-A: Polycarbonate diol A of Synthesis Example 5
B-B: Polycarbonate diol B of Synthesis Example 6
B-C: Polycarbonate diol C of Synthesis Example 7
B-D: Polycarbonate diol D of Synthesis Example 8
B-E: Polycaprolactone diol (trade name: "POLYLITE OD-X-2171", manufactured by DIC CORPORATION)
B-F: Polypropylene glycol (trade name: "EXCENOL 420", manufactured by Asahi Glass Co., Ltd.)
C: Polyethylene oxide (trade name: "MPG-081" of Nippon Nyukazai Co., Ltd.)
E: Urethanization catalyst (trade name: "Neostann U-810" of Nitto Kasei Kogyo K.K.)

[Example 16]

Blocked polyisocyanate composition

The same reactor as used in Synthesis Example 1 was charged with polyisocyanate composition (161.5 g) described in Example 3 and n-butyl acetate (33.4 g). The mixture was stirred at 60°C in a nitrogen atmosphere. Methyl ethyl ketoxime (32.4 g) serving as a blocking agent was added and stirred. Characteristic absorption of an isocyanate group was not observed in an infrared spectrum. Based on this, it was confirmed that the blocked polyisocyanate composition of Example 16 was obtained. In the blocked polyisocyanate composition obtained, the (component) concentration of a diisocyanate trimer having an isocyanurate group and blocked with the blocking agent (three molecules) was 31.5 mass%.

[Examples 17 to 27, Comparative Examples 5 to 9]

Blocked polyisocyanate composition

A reaction was carried out in the same manner as in Example 16 except that polyisocyanate compositions, blocking agents, and n-butyl acetate listed in Table 4 to Table 6 were used. The effective isocyanate content of the polyisocyanate compositions obtained are shown in Table 4 to Table 6.

[Table 4]

EP 3 239 202 B1

| | | | Example 16 | Example 17 | Example 18 | Example 19 | Example 20 | Example 21 | Example 22 | Example 23 |
|---|---|---|---|---|---|---|---|---|---|---|
| Composition of charged starting materials (g) | Polyisocyanate composition/polyisocyanate precursor | Example 2 | - | 187.3 | - | - | - | - | - | - |
| | | Example 3 | 161.5 | - | 161.5 | 161.5 | - | - | - | - |
| | | Example 5 | - | - | - | - | 159.5 | - | - | - |
| | | Example 6 | - | - | - | - | - | 164.7 | - | - |
| | | Example 9 | - | - | - | - | - | - | 179.5 | - |
| | | Example 10 | - | - | - | - | - | - | - | 174.4 |
| | | Example 12 | - | - | - | - | - | - | - | - |
| | | Example 13 | - | - | - | - | - | - | - | - |
| | | Comparative Example 1 | - | - | - | - | - | - | - | - |
| | | Comparative Example 2 | - | - | - | - | - | - | - | - |
| | | Comparative Example 3 | - | - | - | - | - | - | - | - |
| | | Comparative Example 4 | - | - | - | - | - | - | - | - |
| | | Synthesis Example 1 | - | - | - | - | - | - | - | - |
| | Blocking agent | D-1 | 32.4 | 32.4 | - | - | 31.4 | 33.5 | 33.8 | 27.0 |
| | | D-2 | - | - | 35.7 | - | - | - | - | - |
| | | D-3 | - | - | - | 37.6 | - | - | - | - |
| | Diluent | n-Butyl acetate | 33.4 | 36.7 | 34.6 | 68.6 | 32.6 | 34.3 | 35.8 | 31.5 |
| | Polyisocyanate precursor/solid content | | 48% | 43% | 47% | 46% | 49% | 47% | 44% | 47% |
| | Polycarbonate diol/solid content | | 12% | 22% | 12% | 12% | 12% | 13% | 11% | 18% |
| | Hydrophilic compound/solid content | | 17% | 15% | 17% | 17% | 17% | 17% | 24% | 17% |
| | Blocking agent/solid content | | 22% | 20% | 24% | 25% | 22% | 23% | 21% | 18% |
| (Physical property 6) Concentration (mass%) of diisocyanate trimer having isocyanurate group and blocked with blocking agent (3 molecules) | | | 31.5 | 27.2 | 31.6 | 31.6 | 15.1 | 41.0 | 29.2 | 24.5 |

26

[Table 5]

| | | | Example 24 | Example 25 | Comparative Example 5 | Comparative Example 6 | Comparative Example 7 | Comparative Example 8 | Comparative Example 9 |
|---|---|---|---|---|---|---|---|---|---|
| Composition of charged starting materials (g) | Polyisocyanate composition/polyisocyanate precursor | Example 2 | - | - | - | - | - | - | - |
| | | Example 3 | - | - | - | - | - | - | - |
| | | Example 5 | - | - | - | - | - | - | - |
| | | Example 6 | - | - | - | - | - | - | - |
| | | Example 9 | - | - | - | - | - | - | - |
| | | Example 10 | - | - | - | - | - | - | - |
| | | Example 12 | 179.2 | - | - | - | - | - | - |
| | | Example 13 | - | 156.6 | - | - | - | - | - |
| | | Comparative Example 1 | - | - | 162.5 | - | - | - | - |
| | | Comparative Example 2 | - | - | - | 156.3 | - | - | - |
| | | Comparative Example 3 | - | - | - | - | 153.5 | - | - |
| | | Comparative Example 4 | - | - | - | - | - | 154.5 | - |
| | | Synthesis Example 1 | - | - | - | - | - | - | 100.0 |
| | Blocking agent | D-1 | 34.7 | 29.3 | 32.4 | 32.4 | 39.3 | 38.3 | 46.4 |
| | | D-2 | - | - | - | - | - | - | - |
| | | D-3 | - | - | - | - | - | - | - |
| | Diluent | n-Butyl acetate | 36.3 | 31.2 | 33.4 | 32.7 | 35.0 | 36.0 | 60.7 |
| | Polyisocyanate precursor/solid content | | 44% | 50% | 48% | 49% | 48% | 48% | 68% |
| | Polycarbonate diol/solid content | | 3.4% | 19% | - | - | - | 26% | - |
| | Hydrophilic compound/solid content | | 31% | 9.0% | 17% | 18% | 26% | - | - |
| | Blocking agent/solid content | | 22% | 21% | 22% | 23% | 27% | 26% | 32% |
| (Physical property 6) Concentration (mass%) of diisocyanate trimer having isocyanurate group and blocked with blocking agent (3 molecules) | | | 32.8 | 27.5 | 30.7 | 32.2 | 40.0 | 18.3 | 51.4 |

27

[Table 6]

| | | | Example 26 | Example 27* |
|---|---|---|---|---|
| Composition of charged starting materials (g) | Polyisocyanate com position/ polyisocyanate precursor | Example 14 | 163.2 | - |
| | | Example 15 | - | 226.4 |
| | Blocking agent | D-1 | 34.0 | 19.4 |
| | Diluent | n-Butyl acetate | 34.4 | 32.1 |
| | Polyisocyanate precursor/solid content | | 47% | 39% |
| | Polycarbonate diol/solid content | | 13% | 22% |
| | Hydrophilic compound/solid content | | 17% | 28% |
| | Blocking agent/solid content | | 23% | 11% |
| (Physical property 6) Concentration (mass%) of diisocyanate trimer having biuret group and blocked with blocking agent (3 molecules) | | | 27.9 | 8.0 |
| * for reference | | | | |

The symbols described in Table 4 to Table 6 represent the following substances.

D-1: Methyl ethyl ketoxime

D-2: 3,5-Dimethylpyrazole

D-3: di-Isopropylamine

<Evaluation>

[Examples 28 to 42, Comparative Examples 10 to 14]

Polyisocyanate compositions

Each of the polyisocyanate compositions obtained in Examples 1 to 15 and Comparative Examples 1 to 4 and polyisocyanate precursor a obtained in Synthesis Example 1 were diluted with n-butyl acetate so as to obtain a solid content of 70%. Using polyisocyanates, dispersion stability in water, water resistance, heat resistance strength, weather resistance, hardenability, bubble removability during hardening and extensibility were evaluated. The results thereof are shown in Tables 7 to 9.

[Table 7]

| | Example 28 | Example 29 | Example 30 | Example 31 | Example 32 | Example 33 | Example 34 | Example 35 | Example 36 |
|---|---|---|---|---|---|---|---|---|---|
| Polyisocyanate composition/ polyisocyanate precursor | Example 1 | Example 2 | Example 3 | Example 4 | Example 5 | Example 6 | Example 7 | Example 8 | Example 9 |
| (Evaluation 1) Dispersion stability in water | ○ | ○ | ○ | ○ | ○ | ○ | ○ | ○ | ○ |
| (Evaluation 2) Water resistance | ○ | ○ | ○ | ○ | ○ | ○ | ○ | ○ | ○ |
| (Evaluation 3) Heat resistance strength | ○ | ○ | ◎ | ○ | ◎ | ◎ | ○ | ○ | ○ |
| (Evaluation 4) Weather resistance | ◎ | ◎ | ◎ | ○ | ○ | ◎ | ◎ | ◎ | ○ |
| (Evaluation 5) Hardenability | ○ | ◎ | ◎ | ○ | ○ | ◎ | ○ | ○ | ○ |
| (Evaluation 6) Bubble removability during hardening | ◎ | ◎ | ◎ | ◎ | ◎ | ◎ | ◎ | ○ | ◎ |

[Table 8]

| | Example 37 | Example 38 | Example 39 | Example 40 | Comparative Example 10 | Comparative Example 11 | Comparative Example 12 | Comparative Example 13 | Comparative Example 14 |
|---|---|---|---|---|---|---|---|---|---|
| Polyisocyanate composition/ polyisocyanate precursor | Example 10 | Example 11 | Example 12 | Example 13 | Comparative Example 1 | Comparative Example 2 | Comparative Example 3 | Comparative Example 4 | Synthesis Example 1 |
| (Evaluation 1) Dispersion stability in water | ○ | ○ | ○ | ○ | ○ | ○ | ○ | × | × |
| (Evaluation 2) Water resistance | ○ | ○ | ○ | ○ | ○ | × | × | Unable to evaluate | Unable to evaluate |
| (Evaluation 3) Heat resistance strength | ◎ | ◎ | ○ | ○ | × | × | ○ | Unable to evaluate | Unable to evaluate |
| (Evaluation 4) Weather resistance | ○ | ○ | ○ | ○ | ○ | ○ | ○ | Unable to evaluate | Unable to evaluate |
| (Evaluation 5) Hardenability | ◎ | ◎ | △ | ◎ | ◎ | ◎ | △ | Unable to evaluate | Unable to evaluate |
| (Evaluation 6) Bubble removability during hardening | ◎ | ○ | × | × | ○ | ○ | ○ | Unable to evaluate | Unable to evaluate |

EP 3 239 202 B1

[Table 9]

|  | Example 41 | Example 42* |
|---|---|---|
| Polyisocyanate composition/polyisocyanate precursor | Example 14 | Example 15 |
| (Evaluation 1) Dispersion stability in water | ○ | ○ |
| (Evaluation 2) Water resistance | ○ | ○ |
| (Evaluation 3) Heat resistance strength | ○ | ○ |
| (Evaluation 5) Hardenability | ◎ | ◎ |
| (Evaluation 7) Extensibility | ◎ | ○ |
| * for reference | | |

[Examples 43 to 54, Comparative Examples 15 to 19]

Blocked polyisocyanate composition

Blocked polyisocyanate compositions obtained in Examples 16 to 27 and Comparative Examples 5 to 9 were subjected to evaluation for dispersion stability in water, water resistance, heat resistance strength, weather resistance and extensibility. The results thereof are shown in Tables 10 to 12.

[Table 10]

|  | Example 43 | Example 44 | Example 45 | Example 46 | Example 47 | Example 48 | Example 49 | Example 50 |
|---|---|---|---|---|---|---|---|---|
| Blocked-polyisocyanate composition | Example 16 | Example 17 | Example 18 | Example 19 | Example 20 | Example 21 | Example 22 | Example 23 |
| (Evaluation 1) Dispersion stability in water | ○ | ○ | ○ | ○ | ○ | ○ | ○ | ○ |
| (Evaluation 2) Water resistance | ○ | ○ | ○ | ○ | ○ | ○ | ○ | ○ |
| (Evaluation 3) Heat resistance strength | ○ | ○ | ◎ | ◎ | ◎ | ◎ | ○ | ◎ |
| (Evaluation 4) Weather resistance | ◎ | ◎ | ◎ | ○ | ○ | ◎ | ◎ | ○ |

[Table 11]

|  | Example 51 | Example 52 | Comparative Example 15 | Comparative Example 16 | Comparative Example 17 | Comparative Example 18 | Comparative Example 19 |
|---|---|---|---|---|---|---|---|
| Blocked-polyisocyanate composition | Example 24 | Example 25 | Comparative Example 5 | Comparative Example 6 | Comparative Example 7 | Comparative Example 8 | Comparative Example 9 |
| (Evaluation 1) Dispersion stability in water | ○ | ○ | ○ | ○ | ○ | × | × |

(continued)

| | Example 51 | Example 52 | Comparative Example 15 | Comparative Example 16 | Comparative Example 17 | Comparative Example 18 | Comparative Example 19 |
|---|---|---|---|---|---|---|---|
| (Evaluation 2) Water resistance | ○ | ○ | ○ | × | × | Unable to evaluate | Unable to evaluate |
| (Evaluation 3) Heat resistance strength | ○ | ○ | × | × | ○ | Unable to evaluate | Unable to evaluate |
| (Evaluation 4) Weather resistance | ○ | ○ | ○ | ○ | ○ | Unable to evaluate | Unable to evaluate |

[Table 12]

| | Example 53 | Example 54* |
|---|---|---|
| Blocked -polyisocyanate composition | Example 26 | Example 27 |
| (Evaluation 1) Dispersion stability in water | ○ | ○ |
| (Evaluation 2) Water resistance | ○ | ○ |
| (Evaluation 3) Heat resistance strength | ○ | ○ |
| (Evaluation 7) Extensibility | ◎ | ○ |
| * for reference | | |

**Claims**

1. A polyisocyanate composition

   wherein the polyisocyanate composition is obtained from:

   a polyisocyanate obtained from at least one diisocyanate selected from the group consisting of an aliphatic diisocyanate and an alicyclic diisocyanate;
   a polycarbonate diol; and
   a hydrophilic compound,

   wherein the hydrophilic compound can react with one isocyanate group per molecule thereof, and
   wherein the polyisocyanate composition comprises a diisocyanate trimer having an unreacted isocyanurate group in an amount of 10 mass% or more and 60 mass% or less based on a solid content of the polyisocyanate composition.

2. The polyisocyanate composition according to Claim 1, comprising the diisocyanate trimer having the unreacted isocyanurate group in an amount of 10 mass% or more and 40 mass% or less based on the solid content of the polyisocyanate composition.

3. The polyisocyanate composition according to Claim 1 or 2, wherein a molar ratio of the isocyanurate group based on a total amount of the isocyanurate group and a urethane group contained in the polyisocyanate composition is 0.4 or more and 0.9 or less.

4. The polyisocyanate composition according to any one of Claims 1 to 3, wherein a molar ratio of a structural unit derived from the polycarbonate diol based on a structural unit derived from the hydrophilic compound is 0.1 or more and 2.5 or less.

5. The polyisocyanate composition according to any one of Claims 1 to 4, wherein the polycarbonate diol is obtained by copolymerization of:

a first diol having 2 or more and 20 or less carbon atoms;
a second diol having 2 or more and 20 or less carbon atoms; and
a carbonate compound.

6. The polyisocyanate composition according to any one of Claims 1 to 5, wherein an average number of isocyanate functional groups is 2.5 or more and 4.5 or less.

7. The polyisocyanate composition according to any one of Claims 1 to 6, wherein an average number of isocyanate functional groups in the polyisocyanate is 3.0 or more and 20 or less.

8. The polyisocyanate composition according to any one of Claims 1 to 7, wherein the diisocyanate comprises hexamethylene diisocyanate.

9. The polyisocyanate composition according to any one of Claims 1 to 8, comprising:

a structural unit derived from the polyisocyanate in an amount of 30 mass% or more and 70 mass% or less;
a structural unit derived from the polycarbonate diol in an amount of 10 mass% or more and 60 mass% or less; and
a structural unit derived from the hydrophilic compound in an amount of 5.0 mass% or more and 30 mass% or less,
based on a solid content of the polyisocyanate composition.

10. A blocked polyisocyanate composition wherein the blocked polyisocyanate composition is obtained from:

the polyisocyanate composition according to any one of Claims 1 to 9; and
a thermally dissociable blocking agent.

11. The blocked polyisocyanate composition according to Claim 10, comprising a diisocyanate trimer having an isocyanurate group and blocked with the thermally dissociable blocking agent (three molecules) in an amount of 10 mass% or more and 60 mass% or less based on a solid content of the blocked polyisocyanate composition.

12. The blocked polyisocyanate composition according to Claim 11, comprising the diisocyanate trimer having the isocyanurate group and blocked with the thermally dissociable blocking agent (three molecules) in an amount of 10 mass% or more and 40 mass% or less based on the solid content of the blocked polyisocyanate composition.

13. The blocked polyisocyanate composition according to any one of Claims 10 to 12, comprising:

a structural unit derived from the polyisocyanate in an amount of 20 mass% or more and 60 mass% or less;
a structural unit derived from the polycarbonate diol in an amount of 5.0 mass% or more and 55 mass% or less;
a structural unit derived from the hydrophilic compound in an amount of 3.0 mass% or more and 20 mass% or less; and
a structural unit derived from the thermally dissociable blocking agent in an amount of 3.0 mass% or more and 20 mass% or less,
based on the solid content of the blocked polyisocyanate composition.

14. A method for producing the polyisocyanate composition according to claim 1, comprising a first reaction step of reacting:

the polyisocyanate obtained from at least one diisocyanate selected from the group consisting of an aliphatic diisocyanate and an alicyclic diisocyanate;
the polycarbonate diol; and
the hydrophilic compound,

wherein the hydrophilic compound can react with one isocyanate group per molecule thereof.

15. The method for producing a polyisocyanate composition according to Claim 14, wherein, in the first reaction step:

the polyisocyanate is used in an amount of 30 mass% or more and 70 mass% or less;
the polycarbonate diol is used in an amount of 10 mass% or more and 60 mass% or less; and
the hydrophilic compound is used in an amount of 5.0 mass% or more and 30 mass% or less,
based on a total amount of the polyisocyanate, the polycarbonate diol and the hydrophilic compound.

16. A method for producing the blocked polyisocyanate composition according to claim 10, comprising a second reaction step of reacting:

the polyisocyanate obtained from at least one diisocyanate selected from the group consisting of an aliphatic diisocyanate and an alicyclic diisocyanate, a polycarbonate diol;
the hydrophilic compound; and
the thermally dissociable blocking agent, wherein the hydrophilic compound can react with one isocyanate group per molecule thereof.

17. The method for producing a blocked polyisocyanate composition according to Claim 16, wherein, in the second reaction step:

the polyisocyanate is used in an amount of 20 mass% or more and 60 mass% or less;
the polycarbonate diol is used in an amount of 5 mass% or more and 55 mass% or less;
the hydrophilic compound is used in an amount of 3.0 mass% or more and 20 mass% or less; and
the thermally dissociable blocking agent is used in an amount of 3.0 mass% or more and 20 mass% or less,
based on the total amount of the polyisocyanate, the polycarbonate diol, the hydrophilic compound and the thermally dissociable blocking agent.

18. A resin composition comprising:

at least one composition selected from the group consisting of the polyisocyanate compositions according to any one of Claims 1 to 9; and the blocked polyisocyanate compositions according to Claims 10 to 13, and an active hydrogen compound.

19. A hardened material wherein the hardened material is obtained by hardening the resin composition according to Claim 18.


**Patentansprüche**

1. Polyisocyanatzusammensetzung,
wobei die Polyisocyanatzusammensetzung erhalten wird aus:

einem Polyisocyanat, welches aus mindestens einem Diisocyanat erhalten wird, ausgewählt aus der Gruppe bestehend aus einem aliphatischen Diisocyanat und einem alicyclischen Diisocyanat;
einem Polycarbonatdiol; und
einer hydrophilen Verbindung,
wobei die hydrophile Verbindung pro Molekül davon mit einer Isocyanatgruppe reagieren kann, und
wobei die Polyisocyanatzusammensetzung ein Diisocyanattrimer, welches eine nicht-umgesetzte Isocyanuratgruppe aufweist, in einer Menge von 10 Massen-% oder mehr und 60 Massen-% oder weniger, bezogen auf einen Feststoffgehalt der Polyisocyanatzusammensetzung, umfasst.

2. Polyisocyanatzusammensetzung nach Anspruch 1, welche das Diisocyanattrimer, welches die nicht-umgesetzte Isocyanuratgruppe aufweist, in einer Menge von 10 Massen-% oder mehr und 40 Massen-% oder weniger, bezogen auf den Feststoffgehalt der Polyisocyanatzusammensetzung, umfasst.

3. Polyisocyanatzusammensetzung nach Anspruch 1 oder 2, wobei ein Molverhältnis der Isocyanuratgruppe, bezogen auf eine Gesamtmenge der Isocyanuratgruppe und einer Urethangruppe, die in der Polyisocyanatzusammensetzung enthalten sind, 0,4 oder mehr und 0,9 oder weniger beträgt.

**4.** Polyisocyanatzusammensetzung nach einem der Ansprüche 1 bis 3, wobei ein Molverhältnis einer von dem Polycarbonatdiol abgeleiteten Struktureinheit, bezogen auf eine von der hydrophilen Verbindung abgeleiteten Struktureinheit, 0,1 oder mehr und 2,5 oder weniger beträgt.

**5.** Polyisocyanatzusammensetzung nach einem der Ansprüche 1 bis 4, wobei das Polycarbonatdiol durch Copolymerisation von:

einem ersten Diol mit 2 oder mehr und 20 oder weniger Kohlenstoffatomen;
einem zweiten Diol mit 2 oder mehr und 20 oder weniger Kohlenstoffatomen; und
einer Carbonatverbindung
erhalten wird.

**6.** Polyisocyanatzusammensetzung nach einem der Ansprüche 1 bis 5, wobei die durchschnittliche Anzahl von funktionellen Isocyanatgruppen 2,5 oder mehr und 4,5 oder weniger ist.

**7.** Polyisocyanatzusammensetzung nach einem der Ansprüche 1 bis 6, wobei die durchschnittliche Anzahl von funktionellen Isocyanatgruppen in dem Polyisocyanat 3,0 oder mehr und 20 oder weniger ist.

**8.** Polyisocyanatzusammensetzung nach einem der Ansprüche 1 bis 7, wobei das Diisocyanat Hexamethylendiisocyanat umfasst.

**9.** Polyisocyanatzusammensetzung nach einem der Ansprüche 1 bis 8, umfassend:

eine von dem Polyisocyanat abgeleitete Struktureinheit in einer Menge von 30 Massen-% oder mehr und 70 Massen-% oder weniger;
eine von dem Polycarbonatdiol abgeleitete Struktureinheit in einer Menge von 10 Massen-% oder mehr und 60 Massen-% oder weniger; und
eine von der hydrophilen Verbindung abgeleitete Struktureinheit in einer Menge von 5,0 Massen-% oder mehr und 30 Massen-% oder weniger,
bezogen auf den Feststoffgehalt der Polyisocyanatzusammensetzung.

**10.** Zusammensetzung von blockiertem Polyisocyanat, wobei die Zusammensetzung von blockiertem Polyisocyanat erhalten wird aus:

der Polyisocyanatzusammensetzung nach einem der Ansprüche 1 bis 9; und
einem thermisch dissoziierbaren Blockierungsmittel.

**11.** Zusammensetzung von blockiertem Polyisocyanat nach Anspruch 10, umfassend ein Diisocyanattrimer, welches eine Isocyanuratgruppe aufweist und mit dem thermisch dissoziierbaren Blockierungsmittel blockiert ist (drei Moleküle), in einer Menge von 10 Massen-% oder mehr und 60 Massen-% oder weniger, bezogen auf den Feststoffgehalt der Zusammensetzung von blockiertem Polyisocyanat.

**12.** Zusammensetzung von blockiertem Polyisocyanat nach Anspruch 11, umfassend das Diisocyanattrimer, welches die Isocyanuratgruppe aufweist und mit dem thermisch dissoziierbaren Blockierungsmittel blockiert ist (drei Moleküle), in einer Meng von 10 Massen-% oder mehr und 40 Massen-% oder weniger, bezogen auf den Feststoffgehalt der Zusammensetzung von blockiertem Polyisocyanat.

**13.** Zusammensetzung von blockiertem Polyisocyanat nach einem der Ansprüche 10 bis 12, umfassend:

eine von dem Polyisocyanat abgeleitete Struktureinheit in einer Menge von 20 Massen-% oder mehr und 60 Massen-% oder weniger;
eine von dem Polycarbonatdiol abgeleitete Struktureinheit in einer Menge von 5,0 Massen-% oder mehr und 55 Massen-% oder weniger;
eine von der hydrophilen Verbindung abgeleitete Struktureinheit in einer Menge von 3,0 Massen-% oder mehr und 20 Massen-% oder weniger; und
eine von dem thermisch dissoziierbaren Blockierungsmittel abgeleitete Struktureinheit in einer Menge von 3,0 Massen-% oder mehr und 20 Massen-% oder weniger,
bezogen auf den Feststoffgehalt der Zusammensetzung von blockiertem Polyisocyanat.

**14.** Verfahren zur Herstellung der Polyisocyanatzusammensetzung nach Anspruch 1, mit einem ersten Umsetzungsschritt, bei dem umgesetzt werden:

das Polyisocyanat, welches aus mindestens einem Diisocyanat erhalten wird, ausgewählt aus der Gruppe bestehend aus einem aliphatischen Diisocyanat und einem alicyclischen Diisocyanat;
das Polycarbonatdiol; und
die hydrophile Verbindung,
wobei die hydrophile Verbindung mit einer Isocyanatgruppe pro Molekül davon reagieren kann.

**15.** Verfahren zur Herstellung einer Polyisocyanatzusammensetzung nach Anspruch 14, wobei in dem ersten Umsetzungsschritt:

das Polyisocyanat in einer Menge von 30 Massen-% oder mehr und 70 Massen-% oder weniger verwendet wird;
das Polycarbonatdiol einer Menge von 10 Massen-% oder mehr und 60 Massen-% oder weniger verwendet wird; und
die hydrophile Verbindung einer Menge von 5,0 Massen-% oder mehr und 30 Massen-% oder weniger verwendet wird,
bezogen auf die Gesamtmenge des Polyisocyanats, des Polycarbonatdiols und der hydrophilen Verbindung.

**16.** Verfahren zur Herstellung der Zusammensetzung von blockiertem Polyisocyanat nach Anspruch 10, mit einem zweiten Umsetzungsschritt, bei dem umgesetzt werden:

das Polyisocyanat, welches aus mindestens einem Diisocyanat erhalten wird, ausgewählt aus der Gruppe bestehend aus einem aliphatischen Diisocyanat und einem alicyclischen Diisocyanat;
das Polycarbonatdiol;
die hydrophile Verbindung; und
das thermisch dissoziierbare Blockierungsmittel,
wobei die hydrophile Verbindung mit einer Isocyanatgruppe pro Molekül davon reagieren kann.

**17.** Verfahren zur Herstellung einer Zusammensetzung von blockiertem Polyisocyanat nach Anspruch 16, wobei in dem zweiten Umsetzungsschritt:

das Polyisocyanat in einer Menge von 20 Massen-% oder mehr und 60 Massen-% oder weniger verwendet wird;
das Polycarbonatdiol einer Menge von 5 Massen-% oder mehr und 55 Massen-% oder weniger verwendet wird;
die hydrophile Verbindung einer Menge von 3,0 Massen-% oder mehr und 20 Massen-% oder weniger verwendet wird; und
das thermisch dissoziierbare Blockierungsmittel in einer Menge von 3,0 Massen-% oder mehr und 20 Massen-% oder weniger verwendet wird,
bezogen auf die Gesamtmenge des Polyisocyanats, des Polycarbonatdiols, der hydrophilen Verbindung und des thermisch dissoziierbaren Blockierungsmittels.

**18.** Harzzusammensetzung, umfassend:

mindestens eine Zusammensetzung ausgewählt aus der Gruppe bestehend aus den Polyisocyanatzusammensetzungen nach einem der Ansprüche 1 bis 9 und den Zusammensetzungen von blockiertem Polyisocyanat gemäß den Ansprüchen 10 bis 13; und
eine aktive Wasserstoffverbindung.

**19.** Gehärtetes Material, wobei das gehärtete Material durch Härten der Harzzusammensetzung nach Anspruch 18 erhalten wird.

**Revendications**

**1.** Composition de polyisocyanate
dans laquelle la composition de polyisocyanate est obtenue à partir de :

un polyisocyanate obtenu à partir d'au moins un diisocyanate choisi dans le groupe constitué d'un diisocyanate aliphatique et d'un diisocyanate alicyclique ;
un polycarbonate diol ; et
un composé hydrophile,
dans laquelle le composé hydrophile peut réagir avec un groupe isocyanate par molécule de celui-ci, et
dans laquelle la composition de polyisocyanate comprend un trimère de diisocyanate comportant un groupe isocyanurate n'ayant pas réagi en une quantité de 10 % en masse ou plus et de 60 % en masse ou moins sur la base d'une teneur en matières solides de la composition de polyisocyanate.

2. Composition de polyisocyanate selon la revendication 1, comprenant le trimère de diisocyanate comportant le groupe isocyanurate n'ayant pas réagi en une quantité de 10 % en masse ou plus et de 40 % en masse ou moins sur la base de la teneur en matières solides de la composition de polyisocyanate.

3. Composition de polyisocyanate selon la revendication 1 ou 2, dans laquelle un rapport molaire du groupe isocyanurate sur la base d'une quantité totale du groupe isocyanurate et d'un groupe uréthane contenus dans la composition de polyisocyanate est de 0,4 ou plus et de 0,9 ou moins.

4. Composition de polyisocyanate selon l'une quelconque des revendications 1 à 3, dans laquelle un rapport molaire d'un motif structural dérivé du polycarbonate diol sur la base d'un motif structural dérivé du composé hydrophile est de 0,1 ou plus et de 2,5 ou moins.

5. Composition de polyisocyanate selon l'une quelconque des revendications 1 à 4, dans laquelle le polycarbonate diol est obtenu par copolymérisation de :

   un premier diol comportant 2 atomes de carbone ou plus et 20 atomes de carbone ou moins ;
   un second diol comportant 2 atomes de carbone ou plus et 20 atomes de carbone ou moins ; et
   un composé de carbonate.

6. Composition de polyisocyanate selon l'une quelconque des revendications 1 à 5, dans laquelle un nombre moyen de groupes fonctionnels isocyanate est de 2,5 ou plus et de 4,5 ou moins.

7. Composition de polyisocyanate selon l'une quelconque des revendications 1 à 6, dans laquelle un nombre moyen de groupes fonctionnels isocyanate dans le polyisocyanate est de 3,0 ou plus et de 20 ou moins.

8. Composition de polyisocyanate selon l'une quelconque des revendications 1 à 7, dans laquelle le diisocyanate comprend du diisocyanate d'hexaméthylène.

9. Composition de polyisocyanate selon l'une quelconque des revendications 1 à 8, comprenant :

   un motif structural dérivé du polyisocyanate en une quantité de 30 % en masse ou plus et de 70 % en masse ou moins ;
   un motif structural dérivé du polycarbonate diol en une quantité de 10 % en masse ou plus et de 60 % en masse ou moins ; et
   un motif structural dérivé du composé hydrophile en une quantité de 5,0 % en masse ou plus et de 30 % en masse ou moins,
   sur la base d'une teneur en matières solides de la composition de polyisocyanate.

10. Composition de polyisocyanate bloqué dans laquelle la composition de polyisocyanate bloqué est obtenue à partir de :

   la composition de polyisocyanate selon l'une quelconque des revendications 1 à 9 ; et
   un agent bloquant thermiquement dissociable.

11. Composition de polyisocyanate bloqué selon la revendication 10, comprenant un trimère de diisocyanate comportant un groupe isocyanurate et bloqué avec l'agent bloquant thermiquement dissociable (trois molécules) en une quantité de 10 % en masse ou plus et de 60 % en masse ou moins sur la base d'une teneur en matières solides de la composition de polyisocyanate bloqué.

12. Composition de polyisocyanate bloqué selon la revendication 11, comprenant le trimère de diisocyanate comportant le groupe isocyanurate et bloqué avec l'agent bloquant thermiquement dissociable (trois molécules) en une quantité de 10 % en masse ou plus et de 40 % en masse ou moins sur la base de la teneur en matières solides de la composition de polyisocyanate bloqué.

13. Composition de polyisocyanate bloqué selon l'une quelconque des revendications 10 à 12, comprenant :

un motif structural dérivé du polyisocyanate en une quantité de 20 % en masse ou plus et de 60 % en masse ou moins ;
un motif structural dérivé du polycarbonate diol en une quantité de 5,0 % en masse ou plus et de 55 % en masse ou moins ;
un motif structural dérivé du composé hydrophile en une quantité de 3,0 % en masse ou plus et de 20 % en masse ou moins ; et
un motif structural dérivé de l'agent bloquant thermiquement dissociable en une quantité de 3,0 % en masse ou plus et de 20 % en masse ou moins,
sur la base de la teneur en matières solides de la composition de polyisocyanate bloqué.

14. Procédé de production de la composition de polyisocyanate selon la revendication 1, comprenant une première étape de réaction consistant à faire réagir :

le polyisocyanate obtenu à partir d'au moins un diisocyanate choisi dans le groupe constitué d'un diisocyanate aliphatique et d'un diisocyanate alicyclique ;
le polycarbonate diol ; et
le composé hydrophile,
dans lequel le composé hydrophile peut réagir avec un groupe isocyanate par molécule de celui-ci.

15. Procédé de production d'une composition de polyisocyanate selon la revendication 14, dans lequel, dans la première étape de réaction :

le polyisocyanate est utilisé en une quantité de 30 % en masse ou plus et de 70 % en masse ou moins ;
le polycarbonate diol est utilisé en une quantité de 10 % en masse ou plus et de 60 % en masse ou moins ; et
le composé hydrophile est utilisé en une quantité de 5,0 % en masse ou plus et de 30 % en masse ou moins,
sur la base d'une quantité totale du polyisocyanate, du polycarbonate diol et du composé hydrophile.

16. Procédé de production de la composition de polyisocyanate bloqué selon la revendication 10, comprenant une seconde étape de réaction consistant à faire réagir :

le polyisocyanate obtenu à partir d'au moins un diisocyanate choisi dans le groupe constitué d'un diisocyanate aliphatique et d'un diisocyanate alicyclique,
un polycarbonate diol ;
le composé hydrophile ; et
l'agent bloquant thermiquement dissociable,
dans lequel le composé hydrophile peut réagir avec un groupe isocyanate par molécule de celui-ci.

17. Procédé de production d'une composition de polyisocyanate bloqué selon la revendication 16, dans lequel, dans la seconde étape de réaction :

le polyisocyanate est utilisé en une quantité de 20 % en masse ou plus et de 60 % en masse ou moins ;
le polycarbonate diol est utilisé en une quantité de 5 % en masse ou plus et de 55 % en masse ou moins ;
le composé hydrophile est utilisé en une quantité de 3,0 % en masse ou plus et de 20 % en masse ou moins ; et
l'agent bloquant thermiquement dissociable est utilisé en une quantité de 3,0 % en masse ou plus et de 20 % en masse ou moins,
sur la base de la quantité totale du polyisocyanate, du polycarbonate diol, du composé hydrophile et de l'agent bloquant thermiquement dissociable.

18. Composition de résine comprenant :

au moins une composition choisie dans le groupe constitué des compositions de polyisocyanate selon l'une quelconque des revendications 1 à 9 ; et les compositions de polyisocyanate bloqué selon les revendications 10 à 13, et
un composé d'hydrogène actif.

19. Matériau durci dans lequel le matériau durci est obtenu par durcissement de la composition de résine selon la revendication 18.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9328654 A
- WO 2001088006 A
- US 2011281998 A1
- US 2011306724 A1
- US 2011077310 A1
- JP 62041496 A
- JP 57034107 A
- JP S6127531 A

**Non-patent literature cited in the description**

- **H. SCHNELL.** Polymer Reviews. Interscience Publishers, 1964, vol. 9, 9-20